# DEMANDE DE BREVET EUROPEEN

(11) **EP 4 813 262 A1**
(43) Date de publication de la demande: **30.09.2026**
(21) Numéro de dépôt: 26168093.8
(22) Date de dépôt: 26.03.2026
(51) Int. Cl.: A47J 43/26

(54) **CASSE-NOIX A MAIN A ASSISTANCE ÉLECTRIQUE**

(30) Priorité: 28.03.2025 FR 2503257
(71) Demandeur: Goubert Gaebele, Robert, 64700 Hendaye (FR)
(72) Inventeur: Goubert Gaebele, Robert, 64700 Hendaye (FR)
(74) Mandataire: Verdure, Stéphane

(57) **Abrégé**

Un casse-noix à main comprend un boîtier avec une enveloppe externe ayant une partie avant (1), et une partie arrière mobile en rotation par rapport à la partie avant et formant une poignée rotative (2). L'appareil comprend un piston broyeur (20) pour casser une noix (200) dans un logement de fruit (102), qui est mû selon le principe vis-écrou par un vérin électrique ayant un moteur électrique (16) produisant la force requise pour casser la coque du fruit. Le piston (20) et le vérin appartiennent à un ensemble mobile (103), qui est déplacé en translation longitudinale quand un utilisateur tourne manuellement la poignée (2), via une vis-sans-fin (20) faisant partie de l'ensemble mobile (103). Ceci pré-positionne le piston et le vérin jusqu'à ce qu'un interrupteur (191) disposé en avant du logement (102) détecte un contact franc du fruit (200) pressé par le piston, pour déclencher la commande du moteur (16).

## Description

### Domaine technique de l'invention

La présente se rapporte à un casse-noix à main pour utilisation dans un cadre domestique. Plus particulièrement, l'invention concerne un casse-noix à main à assistance électrique.

### Arrière-plan technologique

Un casse-noix (également appelé casse-noisette en français) est un instrument de cuisine ou de table servant à casser les noix et les noisettes, et plus généralement les fruits secs à coque dure. Au sens de la présente description, un casse-noix à main, ou casse-noix de table, est un instrument tenant entre les mains d'un utilisateur et permettant de casser individuellement des fruits secs à coque dure comme des noix, des noisettes, des pistaches, des noix de cajou, des noix de pécan, des amandes, etc.

La facilité d'utilisation communément attendue d'un tel dispositif englobe notamment les avantages suivants :
- casser la coque d'un tel fruit à coque dure sans nécessiter d'effort important de la part de l'utilisateur ;
- éviter ou limiter les projections de débris de la coque lorsqu'elle se brise ; et,
- respecter autant que faire se peut l'intégrité de la partie comestible du fruit lors de l'opération.

Des casse-noix à main connus opèrent selon différents principes de fonctionnement.

Le principe de fonctionnement des casse-noix les plus répandus est celui d'une pince composée de deux mâchoires articulées par une charnière ayant chacune une portion de forme concave agencées en vis-à-vis l'une de l'autre, et dont le rayon de courbure correspond sensiblement à la forme habituelle de la coque des fruits concernés. Ces mâchoires sont prolongées chacune par un levier de préhension du côté opposé à la charnière, permettant de démultiplier la force de serrage exercée par la poigne de l'utilisateur, dans une mesure qui dépend de la longueur du bras-de-levier ainsi obtenu. Ces modèles sont délicats à manipuler en raison notamment de la possibilité d'un échappement soudain du fruit à coque dure dès que la force de serrage est exercée par les mâchoires de la pince, ce qui conduit l'utilisateur à tenter de maintenir latéralement, avec une main, la noix entre ces deux mâchoires, non sans un risque associé de pincement des doigts ou de la paume de la main ainsi exposée. Les pinces à casser les noix provoquent également la projection en tous sens de fragments de la coque quand celle-ci se brise, généralement brutalement. En outre, l'effort requis pour casser la coque demeure substantiel, et est parfois au-delà des capacités des personnes les plus fragiles, des personnes âgées, ou des enfants. Enfin, les casse-noix à pince ne permettent pas un dosage précis de l'effort, avec le risque d'écraser les cerneaux de noix entre les mâchoires de la pince au moment où la coque se brise et vole en éclats.

D'autres modèles de casse-noix utilisent un principe de martèlement au moyen d'une masselotte mobile qui est guidée dans un tube à l'une des extrémités duquel la noix à casser est disposée. L'utilisateur doit effectuer un geste ample pour secouer d'un coup sec le tube chargé de la noix à casser suivant la direction d'extension du tube, afin que la masselotte soit animée d'un mouvement rapide dans le tube et vienne frapper la coque du fruit à coque pour la briser. Ces modèles évitent les risques de blessure et la dispersion des fragments de coque mentionnés plus haut, qui sont encourus avec les pinces à casser les noix, mais ils sont d'un maniement là-encore peu aisé. Pour être efficace, le geste à accomplir nécessite généralement que l'utilisateur se tienne debout, et son amplitude fait courir le risque qu'une autre personne ou un meuble ou un objet se trouvant à proximité soit heurté durant le maniement.

Enfin, encore d'autres modèles de casse-noix sont des presses qui comprennent une tige mobile, par exemple une tige à vis agencée pour progresser en translation lorsqu'elle est tournée autour de son axe longitudinal. Une extrémité active de cette tige, opposée à une autre extrémité qui est prévue pour la préhension ou la manœuvre de la tige, débouche dans un logement dans lequel la noix à casser est placée. Ladite autre extrémité de la tige est généralement terminée par une poignée rotative, par laquelle l'utilisateur peut manœuvrer la vis en rotation par rapport à un support comprenant au moins un palier fixe avec un filet interne complémentaire du filet de la vis. En fonctionnement, la mise en rotation de la vis qui est imprimée par l'utilisateur induit le déplacement en translation longitudinale de la tige mobile. Par quelques mouvements de rotation successifs, l'extrémité active de la tige à vis est progressivement amenée en contact franc avec la noix, et la poursuite des mouvements de rotation de la tige par l'utilisateur via la poignée rotative conduit à un écrasement progressif de la coque de la noix par ladite extrémité active de la tige. L'avantage est que l'utilisateur peut doser la course longitudinale et la dynamique de la tige, et donc l'effort de cassage, en contrôlant la rotation de la tige. En variante, la tige est supportée par au moins un pallier avec blocage en translation, et son extrémité filetée engrène dans un trou à l'arrière d'un piston broyeur, lequel est doté d'un filet interne complémentaire. Le piston peut alors se déplacer longitudinalement grâce à des moyens de guidage qui contraignent son déplacement en translation uniquement. Ainsi, le piston progresse longitudinalement vers le fruit à coque à casser, progressivement, en réponse aux mouvements de rotation successifs de la tige filetée qui sont appliqués manuellement par l'utilisateur par l'intermédiaire de la poignée rotative. D'autres presses à casser les noix existent dans lesquelles la tige n'est pas une tige à vis ni une tige à extrémité filetée, mais est manœuvrée en translation par l'intermédiaire d'un levier articulé autour d'un axe. Ces variantes permettent de profiter d'un effet de bras de levier qui démultiplie l'effort exercée par la poigne de l'utilisateur.

Par ailleurs, il existe des casse-noix électriques, qui empruntent généralement le mode de fonctionnement et la structure générale des modèles manuels opérant par pression. Dans ces produits, la tige à vis ou la tige à extrémité filetée est mise en rotation par un moteur électrique en remplacement des mouvements de rotation appliqués manuellement par l'utilisateur via une poignée. L'effort mécanique nécessaire à la casse de la coque est alors fourni par le moteur électrique, et non plus par la poigne de l'utilisateur.

Le document DE-202012001237-U1 divulgue ainsi un casse-noix à main de ce type, qui permet le cassage des noix sans effort de la part de l'utilisateur. L'entraînement d'un piston mobile est assuré par un moteur électrique alimenté par une batterie. Le casse-noix à main peut être utilisé pour briser des noix dans un réceptacle fermé, muni d'un couvercle transparent qui peut être ouvert afin d'y loger une noix à casser, de sorte que les fragments de la coque de noix ne peuvent plus être projetés en tous sens lorsque la noix se brise. Le document indique que ce casse-noix peut être utilisé de manière nomade à tout moment et est particulièrement adapté pour une utilisation par des personnes âgées, des femmes et des enfants. En outre, le pincement des doigts de l'utilisateur pendant l'opération est exclu car le moteur s'arrête lorsque le couvercle est ouvert.

Le document GB-2368514-A1 divulgue un petit casse-noix de table motorisé et semi-automatique, composé d'un corps avec une cavité pour recevoir une noix. Ce casse-noix comprend un piston mobile qui peut être entraîné au moyen d'un mécanisme bidirectionnel à vis à couple limité, soit pour progresser à l'intérieur soit pour être extrait vers l'extérieur de ladite cavité. Ce mécanisme comprend un réducteur dont l'arbre d'entrée est entraîné par un moteur électrique à commande semi-automatique activé par un commutateur, afin de produire la force permettant de briser la coquille de la noix logée à l'intérieur de la cavité. Un dispositif de sécurité comprend un couvercle de protection pour fermer la cavité de logement de la noix. En outre, un dispositif de limitation de couple est installé sur le moteur ou dans le réducteur pour permettre le glissement de l'entraînement du moteur en cas de dépassement d'un couple moteur prédéfini. Ce dispositif permet d'éviter d'endommager le casse-noix si le piston rencontre un obstacle trop résistant, par exemple un fruit ayant une coque trop dure. En outre, le limiteur de couple fonctionne également si le piston est complètement rétracté et que le commutateur est maintenu dans le sens de la rétractation de la tige, ce qui arrête le moteur ou lui permet de tourner sans dommage.

Le document CN-201220368491-U1 divulgue un casse-noix à pression électrique qui comprend une cavité, une vis hélicoïdale et une plaque de pression, dans lequel un châssis du casse-noix est relié à une plaque supérieure par des tiges de liaison correspondantes sur deux côtés. La plaque de pression entre le châssis et la plaque supérieure est pourvue d'une vis hélicoïdale qui est vissée dans un filet interne de la plaque supérieure. Un dispositif moteur relié à l'extrémité de la vis hélicoïdale est disposé au-dessus de la plaque supérieure, et le dispositif moteur est relié à un interrupteur. Lors de l'utilisation, la poignée du casse-noix est tenue à la main, une noix comestible est placée dans la cavité, l'interrupteur situé sur la partie supérieure du dispositif moteur est activé, et la vis hélicoïdale permet à la plaque de pression de se déplacer vers le bas pour presser la coque de la noix grâce à la rotation du moteur.

Le document DE-202010004043-U1 divulgue un casse-noix du type à pince avec assistance électrique, dans lequel il est prévu deux mâchoires de cassage reliées à une articulation pour recevoir une noix entre les mâchoires de cassage Cet instrument est caractérisé en ce qu'un moteur fonctionnant électriquement est couplé à au moins une mâchoire de cassage de telle sorte que, pendant le fonctionnement du moteur électrique, ladite mâchoire de cassage peut pivoter autour de l'articulation par rapport à l'autre mâchoire de cassage, pour causer le cassage par pincement de la coque du fruit disposé entre lesdites mâchoires.

Le document CN-201958686-U1 divulgue un casse-noix à main composé d'un corps cylindrique et de deux tiges filetées montées co-axialement et tête-bêche, avec des poignées distales opposées permettant de les visser manuellement dans des trous filetés aux deux extrémités dudit corps, respectivement, afin de la faire progresser longitudinalement l'un vers l'autre. Une noix est disposée dans le corps cylindrique, entre les extrémités proximales respectives des deux tiges filetées. Une tête de serrage de noix, disposée dans le corps cylindrique, est prévue à l'extrémité proximale de chacune des deux tiges filetées. Les deux têtes de serrage de noix sont appariées l'une à l'autre. Une calotte convexe annulaire est disposée sur les bords circonférentiels de la surface d'extrémité de chaque tête de serrage de noix, dont la surface d'extrémité a une structure dentiforme. Comme le casse-noix adopte la forme de deux poignées de vissage rotatives et de deux têtes de serrage dentiformes, le degré de cassage des coques de noix peut être facilement contrôlé manuellement, et les cerneaux de noix peuvent être gardés entiers. La noix est cassée dans le corps cylindrique, ce qui empêche la projection de fragments de la coque de noix lorsqu'elle casse, évitant ainsi que des personnes ou des animaux ne soient blessés par ces éclats de la coque de noix. Le casse-noix à main peut également comprendre un réceptacle pour contenir les cerneaux, ce qui permet de l'utiliser de manière pratique et dans de bonnes conditions d'hygiène.

Enfin, le document CN-208541201-U1 divulgue un dispositif de décorticage de noix permettant de régler le degré de concassage. Ce dispositif fonctionne suivant le principe du martèlement, évoqué en deuxième dans ce qui précède. Il comprend un marteau appelé « dispositif de compression », monté dans un cylindre coulissant qui est disposé verticalement. Le cylindre est entraîné en coulissement vers le haut à chaque cycle de rotation d'un moteur électrique, par l'intermédiaire d'un premier axe rotatif, un premier roulement, un plateau tournant, un premier mécanisme de rotation, un deuxième mécanisme de rotation et une corde de traction. Ainsi, lorsque le moteur fonctionne, il entraîne le plateau tournant, et chaque tour complet du plateau entraîne une course de montée et de descente du cylindre coulissant, ce qui permet au dispositif de compression de casser les noix. Grâce à la présence dans le cylindre coulissant d'un vérin électrique commandé depuis un panneau de commande, d'une tige de poussée coulissante, d'un deuxième manchon coulissant et d'une tige de fixation du bloc de compression, il est possible de raccourcir la tige de poussée électrique afin d'éviter de réduire les noix en poudre. Lors du cassage de noix de petite taille, il suffit d'allonger la tige de poussée électrique pour que le bloc de compression atteigne sa position la plus basse dans le cylindre coulissant et puisse ainsi casser les noix de petite taille. Cela permet de casser des noix de différentes tailles et de régler le degré de concassage, facilitant ainsi le cassage des noix de tailles variées. Lors de l'utilisation, l'utilisateur commence par régler la longueur de la tige de poussée électrique en fonction de la taille de la noix en actionnant le vérin électrique via le tableau de commande. De ce fait, la tige de poussée électrique entraîne la tige coulissante vers le bas ou vers le haut, ce qui fait descendre ou remonter le bloc de compression. Une fois le bloc de compression réglé à la hauteur appropriée, l'utilisateur place la noix sur la face supérieure d'une plaque d'appui fixée à une plaque de base horizontale, et agencée sous et au droit du cylindre coulissant de telle sorte que lorsque le cylindre coulissant atteint sa position la plus basse au cours d'un cycle de rotation du moteur, la plaque d'appui pénètre à l'intérieur du cylindre coulissant. Puis l'utilisateur met le moteur en marche. Le moteur entraîne le cylindre coulissant vers le haut pendant un demi-tour du moteur par l'intermédiaire, en particulier, de la corde de traction. Pendant le demi-tour suivant du moteur, en revanche, le cylindre coulissant est opérationnellement désaccouplé du moteur car la corde devient lâche. Un contrepoids entraîne alors, sous l'effet de sa propre gravité, le cylindre coulissant vers le bas. Lorsque le cylindre coulissant atteint sa position la plus basse, la plaque d'appui pénètre à l'intérieur du cylindre coulissant, et le bloc de compression comprime la noix pour effectuer son décorticage. L'opération est répétée à chaque tour du moteur, achevant le décorticage de la noix.

### Résumé de l'invention

L'invention vise à améliorer encore les casse-noix existants.

Pour cela, l'objet de l'invention est un dispositif à main pour casser par pression la coque d'un fruit à coque dure avec une assistance électrique, ledit dispositif comportant :
- un boîtier allongé, s'étendant suivant une direction longitudinale déterminée ;
- un logement de fruit, agencé à l'avant du boîtier, pour recevoir le fruit à coque dure à casser ; et,
- un piston broyeur, entraîné en translation dans le boîtier suivant la direction longitudinale dudit boîtier par un vérin électrique comprenant une première vis-sans-fin et un moteur électrique d'entraînement en rotation de ladite vis-sans-fin, qui est alimenté par une batterie d'alimentation électrique.

Ce dispositif, ou casse-noix, comprend en outre :
- un bâti, interne au boîtier ;
- une enveloppe externe du boîtier, en au moins deux parties coaxiales enfermant le bâti, avec une partie avant solidaire du bâti, d'une part, et une partie arrière formant une poignée rotative qui peut être manœuvrée, en rotation seulement, par rapport audit bâti, d'autre part ;
- un ensemble mobile, pouvant se déplacer par rapport au bâti en translation dans le boîtier suivant la direction longitudinale dudit boîtier, et comprenant :
   - le piston broyeur,
   - le vérin électrique d'entraînement en translation du piston broyeur avec :
      - la première vis-sans-fin,
      - le moteur électrique d'entraînement en rotation, et
      - la batterie d'alimentation électrique, et
   - une seconde vis-sans-fin configurée pour, en coopération avec la poignée rotative, déplacer l'ensemble mobile en translation dans le boîtier (vers l'avant ou vers l'arrière) en réponse à une manœuvre en rotation de la poignée rotative (dans un sens ou dans l'autre, respectivement); ainsi que,
- un interrupteur de déclenchement agencé au niveau d'une paroi avant du logement de fruit, et configuré pour déclencher la commande du moteur électrique du vérin électrique afin de déplacer le piston broyeur en translation vers l'avant par rapport au reste de l'ensemble mobile, en réponse à un appui franc par le fruit à coque logé dans le logement de fruit contre une paroi avant dudit logement lorsque ledit fruit est poussé par le piston broyeur contre ladite paroi avant par l'effet du déplacement en translation vers l'avant de l'ensemble mobile, ce par quoi la coque du fruit à coque est cassée contre la paroi avant du logement de fruit par pression dudit piston broyeur sous l'effet de la rotation du moteur électrique.

Enfin, le filet de la première vis-sans-fin présente un pas et un diamètre qui sont différents du pas et du diamètre, respectivement, du filet de la seconde vis-sans-fin vis.

Le déplacement purement mécanique de l'ensemble mobile vers l'avant qui est obtenu par la rotation de la poignée actionnée manuellement par l'utilisateur, permet de pré-positionner le piston broyeur dans une position dans le logement de fruit, dans laquelle il est en contact franc avec la noix à casser présente dans ledit logement. En mécanique, on entend par "contact franc" ou "appui franc", une situation où les surfaces en interaction sont en contact (ou appui) direct et ferme, sans jeu ni espace entre elles, pour assurer une transmission effective des forces entre les éléments concernés. Cette situation se distingue d'un simple "touché" ou effleurement, qui se produit lorsque deux surfaces entrent en contact léger ou superficiel et qu'il n'y a pas de pression significative ou de force appliquée entre les surfaces. La fermeture de l'interrupteur de déclenchement qui en résulte, provoque alors automatiquement la commande du moteur électrique pour faire avancer le piston broyeur par rapport au reste de l'ensemble mobile. C'est alors l'énergie électrique absorbée par le moteur qui génère, via le premier système vis-écrou actionné par le vérin électrique, la force de cassage de la noix exercée par le piston broyeur sur la coque de la noix, sans effort à produire par l'utilisateur. La commande du moteur électrique est très simple, et elle est déterministe en ce sens que la course du piston par rapport à sa position de départ au plus près de la carcasse du moteur débute à chaque opération de cassage alors que ledit piston vient juste d'entrer en contact franc avec la coque à casser, quelle que soit la taille, la forme et/ou l'orientation du fruit à coque spécifiquement concerné qui a été inséré dans le logement de fruit. La différence des pas et diamètres des filets respectifs de la première vis-sans-fin et de la seconde vis-sans-fin vis assure un découplage des mouvements de rotation de ces deux vis, qui prévient un mouvement de recul de l'ensemble mobile vers l'arrière du boîtier, par réaction mécanique du piston contre la paroi avant du logement de fruit via la noix à casser, lorsque le moteur électrique est commandé pour causer un mouvement de translation longitudinale du piston broyeur vers l'avant, qui est le mouvement utile à l'opération de cassage de la noix.

Certains aspects préférés mais non limitatifs de ce casse-noix sont les suivants.

Dans des modes de réalisation, le bâti peut comprendre deux parties allongées suivant la direction longitudinale, avec une partie supérieure comprenant un premier évidement et une partie inférieure comprenant un premier évidement complémentaire, ledit premier évidement et ledit premier évidement complémentaire étant configurés pour former un tunnel de guidage lorsque ladite partie supérieure et ladite partie inférieure du bâti sont montées l'une sur l'autre suivant une direction orthogonale à la direction longitudinale, dans lequel l'ensemble mobile est guidé en translation vers l'avant à partir d'une position extrême en arrière et vers l'arrière à partir d'une position extrême en avant.

Dans des modes de réalisation, la partie supérieure du bâti peut comprendre un second évidement et la partie inférieure dudit bâti comprend alors un second évidement complémentaire, ledit second évidement et ledit second évidement complémentaire étant configurés pour former le logement de fruit lorsque ladite partie supérieure et ladite partie inférieure du bâti sont montées l'une sur l'autre, dans lequel le piston broyeur peut être déplacé vers l'avant pour venir en engagement avec la coque du fruit à coque à casser qui est reçu dans ledit logement de fruit. Le même bâti réalise alors une seconde fonction, tout en étant d'une fabrication simple, par exemple par moulage de matière plastique ou par fabrication additive.

Dans des modes de réalisation, la partie avant de l'enveloppe externe du boîtier peut posséder une ouverture venant au droit du logement de fruit pour l'accès audit logement de fruit, et l'enveloppe externe du boîtier peut alors comprendre en outre une trappe mobile pour la fermeture du logement de fruit, qui est coulissante en translation suivant la direction longitudinale entre une position complètement ouverte en arrière et une position complètement fermée en avant. La trappe prévient l'expulsion des débris de la coque et des morceaux du fruit lors du cassage, et leur dispersion non désirée en dehors de l'appareil.

Dans des modes de réalisation, le casse-noix peut comprendre en outre un interrupteur pour la détection de la fermeture de la trappe mobile, agencé à l'avant de l'ouverture de la partie avant de l'enveloppe externe du boîtier, l'activation du moteur électrique étant empêchée en cas de non-fermeture de ladite trappe. Cette disposition prévient le risque de blessure, en assurant que le piston broyeur ne sera pas entraîné par le moteur électrique si un utilisateur garde un doigt dans le logement de fruit, par exemple.

Dans des modes de réalisation, la partie avant de l'enveloppe externe du boîtier peut posséder, à une extrémité arrière de ladite partie avant, une section transversale de forme circulaire ayant un rayon déterminé, et posséder des lignes d'arrêtes longitudinales qui s'étendent longitudinalement depuis une extrémité avant de la partie avant de l'enveloppe externe du boîtier vers l'extrémité arrière de ladite partie avant, lesquelles arrêtes séparant une section transversale à l'avant de la partie avant de l'enveloppe externe du boîtier en sections circonférentielles adjacentes deux-à-deux, chacune en forme de tuile et ayant un rayon de courbure supérieur au rayon de la section transversale de forme circulaire à l'extrémité arrière de la partie avant de l'enveloppe externe du boîtier. L'espace libre qui est ménagé sur la face interne du boîtier au niveau de ces arrêtes, forme un passage longitudinal qui permet de faire passer des conducteurs électriques (fils électriques, ou nappe) de fils électriques, notamment depuis l'avant vers l'arrière de la partie avant du boîtier. Ces conducteurs électriques permettent de raccorder l'interrupteur de déclenchement, et/ou l'interrupteur de détection de fermeture de la trappe, à une unité de commande disposée en arrière dans le boîtier.

Dans des modes de réalisation, la paroi avant du logement de fruit, peut présenter une fente radiale qui s'étend radialement dans un plan transversal, et le dispositif peut alors comprendre en outre un levier pour l'actionnement de l'interrupteur de déclenchement, avec :
- une embase fixe par rapport au bâti ;
- une plaque transversale élastiquement déformable qui s'étend transversalement, depuis l'embase fixe, dans le logement de fruit à l'avant dudit logement et en recouvrement de la fente radiale ;
- une première partie mobile qui s'étend, depuis une face avant de la plaque transversale élastique, suivant la direction longitudinale en passant à travers la fente ; et,
- une seconde partie mobile qui s'étend transversalement dans le prolongement de la première partie mobile, après un coude à 90°, dans un plan transversal en avant de la paroi avant de fond du logement de fruit en regard d'un contact mobile de l'interrupteur d'actionnement pour actionner l'interrupteur de déclenchement en réponse à une déformation élastique vers l'avant de la plaque transversale causée par l'appui franc par le fruit à coque logé dans le logement de fruit contre la paroi avant dudit logement.

Cette solution originale et élégante permet l'actionnement élastique d'un contact de l'interrupteur de déclenchement, tout en garantissant la rigidité de la paroi avant du logement de fruit contre laquelle la noix est pressée par le piston broyeur pour obtenir le cassage de la coque.

Dans des modes de réalisation, le piston broyeur peut avoir une section, en coupe transversale, ayant une forme et des dimensions correspondant sensiblement à la forme et aux dimensions du logement du fruit dans lequel il peut se déplacer en translation suivant la direction longitudinale. Ceci favorise le guidage longitudinal du piston broyeur, et évite sa mise en travers dans le tunnel. En outre, le piston broyeur cloisonne le logement de fruit par rapport au tunnel de guidage de l'ensemble mobile, en prévenant le passage de morceaux de fruit ou de débris de la coque du premier vers le second.

Dans des modes de réalisation, le casse-noix peut comprendre une unité de commande électronique configurée pour piloter la course du piston broyeur vers l'avant en commandant le moteur électrique pendant une durée fixe déterminée en réponse à l'activation de l'interrupteur de déclenchement. Cette commande « en boucle ouverte » est particulièrement simple, et ses effets sont reproductibles de façon déterministe à chaque opération de cassage d'une noix.

Dans des modes de réalisation, l'ensemble mobile peut comprendre en outre un interrupteur de fin de course lié à une face avant du corps du moteur électrique, et, l'arrière du piston broyeur peut présenter un logement pour recevoir un élément élastique configuré pour actionner un contact mobile de l'interrupteur de fin de course afin de commander l'arrêt de la rotation en sens inverse du moteur électrique pour stopper le retrait du piston mobile vers l'arrière. On assure ainsi que, quelle que soit la résistance de la coque du fruit cassé qui a pu raccourcir la course du piston vers l'avant lors de l'opération de cassage, son retrait vers l'arrière qui est commande par la rotation en sens inverse du moteur le ramène toujours à la même position de départ, au plus près de la partie avant de la carcasse du moteur électrique. Le cycle suivant, pour le cassage d'un autre fruit, sera ainsi toujours identique.

Dans des modes de réalisation, l'ensemble mobile peut comprendre en outre une entretoise annulaire fixée à l'avant du corps du moteur électrique, qui s'étend dans un plan transversal, avec un doigt de guidage qui s'étend radialement vers l'extérieur à partir de ladite entretoise, ledit doigt de guidage étant configuré pour guider en translation le déplacement de l'ensemble mobile suivant la direction longitudinale, en coopération avec une fente longitudinale associée qui est formée dans le bâti.

Dans des modes de réalisation, la seconde vis-sans-fin peut avoir la forme d'un tube fermé à l'arrière avec un filet externe, configuré pour loger la batterie d'alimentation électrique. La disposition de la batterie dans le corps de la seconde vis-sans-fin réduit l'encombrement longitudinal de l'ensemble mobile, et donc la dimension longitudinale du casse-noix.

Dans des modes de réalisation, le casse-noix peut comprendre un écrou solidaire de la partie arrière du boîtier, ayant la forme d'un tube fermé à l'arrière avec un filet interne complémentaire du filet de la seconde vis-sans-fin, et étant formé :
- de deux portions d'écrou séparées suivant un plan parallèle à l'axe longitudinal ; ainsi que,
- d'un manchon de maintien ayant un diamètre interne correspond sensiblement au diamètre externe de l'écrou pour s'emmancher d'arrière en avant par-dessus les deux portions d'écrou afin de maintenir lesdites portions d'écrou mutuellement solidaires l'une de l'autre.

Cette configuration permet un assemblage aisé de l'écrou, et son montage facile sur la seconde vis-sans-fin, et assure en même temps sa rigidité une fois assemblé.

Dans des modes de réalisation, l'écrou peut comprendre, à l'avant, un collet formé de deux portions de collet venant de matière avec les deux portions d'écrou, respectivement, de l'écrou, ledit collet ayant une rainure annulaire interne formé de deux portions de rainure qui s'étendent sur une face interne des deux portions de collet, respectivement, de l'écrou, et ladite rainure annulaire interne étant configurée pour coopérer avec une languette annulaire externe correspondante formée à l'extrémité arrière du bâti, de deux portions de languette qui s'étendent sur une face externe de la partie supérieure et de la partie inférieure, respectivement, dudit bâti, pour le guidage en rotation de l'écrou.

### Présentation des dessins

D'autres caractéristiques et avantages de l'invention apparaîtront encore à la lecture de la description qui va suivre. Celle-ci est purement illustrative et doit être lue en regard des dessins annexés sur lesquels :
[Figure 1] est une vue en perspectives tridimensionnelles du casse-noix objet de l'invention.
[Figure 2] est une vue éclatée des principaux éléments constitutifs du casse-noix de la figure 1.
[Figure 3] est une vue de face du casse-noix de la Figure 1.
[Figure 4] est une vue de dessous du casse-noix de la Figure 3.
[Figure 5] est une vue de côté droit du casse-noix de la Figure 3.
[Figure 6] est une vue du côté gauche du cassenoix de la Figure 3.
[Figure 7] est une vue de dessus du casse-noix de la Figure 3.
[Figure 8] est une vue en perspectives tridimensionnelles de la carcasse interne du casse-noix selon des modes de réalisation de l'invention.
[Figure 9] est une vue en perspectives tridimensionnelles de la partie inférieure de la carcasse interne du casse-noix qui est montrée à la Figure 8.
[Figure 10] est une vue en perspectives tridimensionnelles de la partie supérieure de la carcasse interne du casse-noix qui est montrée à la Figure 8.
[Figure 11] est une vue en perspectives tridimensionnelles de l'ensemble mobile du casse-noix selon des modes de réalisation de l'invention.
[Figure 12] est une vue en perspectives tridimensionnelles d'éléments du casse-noix coopérant avec l'ensemble mobile de la Figure 11.
[Figure 13] est une vue en perspectives tridimensionnelles d'éléments constitutifs de l'ensemble vis-écrou commandé par la poignée rotative du casse-noix.
[Figure 14] est une vue en perspectives tridimensionnelles de l'intérieur de la poignée rotative du casse-noix.
[Figure 15] est une vue en perspectives tridimensionnelles montrant une noix encore intacte, pincée entre l'ensemble mobile et le fond du logement de fruit, après pré-positionnement de l'ensemble mobile par la poignée rotative vers l'avant, mais juste avant l'activation du moteur électrique du vérin électrique destiné à casser la coque de la noix.
[Figure 16] est une vue en perspectives tridimensionnelles éclatée des éléments constitutifs de l'ensemble mobile du casse-noix, illustrant leur assemblage les uns avec les autres.

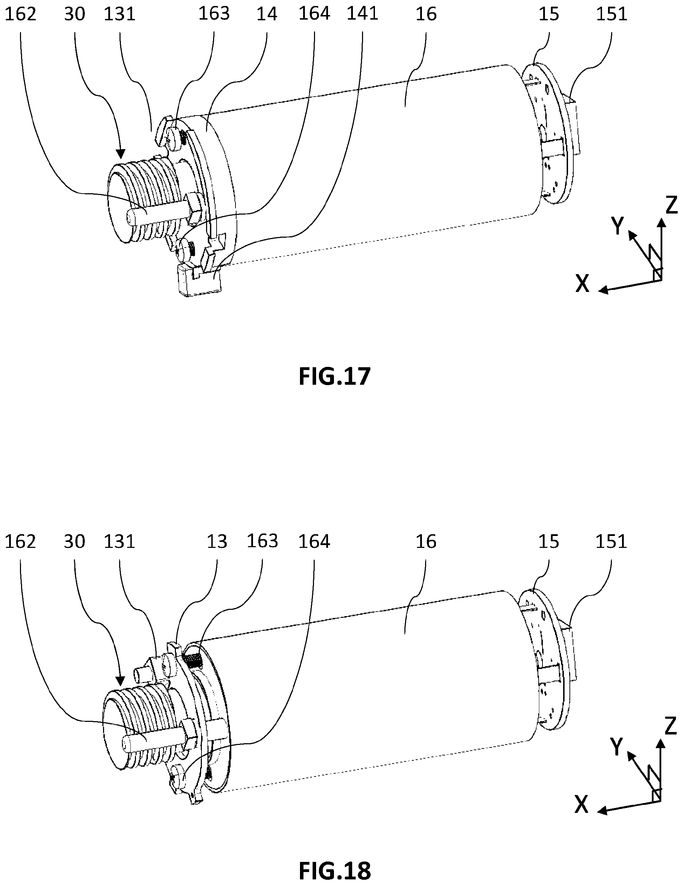

[Figure 17] est une vue en perspectives tridimensionnelles, de l'avant vers l'arrière, montrant en particulier l'agencement du moteur électrique et de sa platine support.
[Figure 18] est une vue en perspectives tridimensionnelles, de l'avant vers l'arrière, montrant en particulier l'agencement d'un premier circuit imprimé et d'un deuxième circuit imprimé appartenant à l'ensemble mobile, à l'avant et à l'arrière du moteur électrique, respectivement.
[Figure 19] est une vue en perspectives tridimensionnelles, de l'arrière vers l'avant, montrant la batterie électrique l'ensemble mobile agencée à l'arrière du circuit imprimé à l'arrière du moteur électrique.
[Figure 20] est une vue en perspectives tridimensionnelles, légèrement de bas en haut et de l'arrière vers l'avant, d'un troisième circuit imprimé agencée de manière fixe au niveau du fond du logement de fruit, à l'avant du casse-noix.
[Figure 21] est une vue en perspectives tridimensionnelles, de trois-quarts avant environ, avec une coupe transversale au niveau de l'arbre du moteur électrique.

### Description des modes de réalisation

Sur les figures et dans la suite de la description, les mêmes signes de référence désignent des éléments identiques ou similaires. De plus, les différents éléments ne sont pas forcément représentés à l'échelle de manière à privilégier la clarté des figures. Par ailleurs, les différentes formes de réalisation et variantes évoquées ne sont pas exclusives les unes des autres et peuvent être combinées entre elles.

Dans la description qui suit, les fonctions ou les constructions bien connues de l'homme du métier ne sont pas décrites en détail, car elles obscurciraient inutilement la description.

Certains fruits charnus à noyau (ou drupes) sont caractérisés par une graine à enveloppe dure (endocarpe lignifié) et indéhiscente, c'est-à-dire qui ne s'ouvre pas d'elle-même et qui doit subir une décomposition organique ou une action mécanique exogène pour libérer son contenu, afin de permettre à la graine qu'elle contient de germer. Dans la suite de la description, on prendra l'exemple non limitatif d'une noix, qui est une drupe caractérisée par un péricarpe composé d'une partie charnue (le mésocarpe, appelé « brou ») qui constitue la chair du fruit mais qui est inconsommable, et d'une partie durcie (l'endocarpe, aussi appelé sclérocarpe) qui forme la paroi du noyau contenant la graine, laquelle graine est la partie comestible du fruit, appelée cerneau de noix. L'endocarpe sclérifié de la noix est communément appelé coquille (« *nutshell* » en anglais). Cependant, des modes de réalisation peuvent être adaptés à d'autres fruits à coque dure qui ont en commun de renfermer une partie comestible, par exemple des noisettes, des pistaches, des noix de cajou, des noix de pécan, des amandes, des noix de macadamia, des noix du Brésil, etc.

Le terme "coque" désigne le plus souvent l'endocarpe des fruits cités ci-dessus.

L'invention porte sur un dispositif à main pour casser la coque d'un fruit à coque dure, qui opère selon le principe d'une presse à casser les noix, avec une assistance électrique. Par commodité, ce dispositif est appelé "casse-noix" ou "casse-noix électrique" dans ce qui suit, bien que la noix ne soit pas le seul fruit à coque dure pouvant être cassée avec ce dispositif, comme déjà indiqué.

Le casse-noix peut être utilisé comme ustensile de cuisine et/ou comme instrument de table, pour des applications domestiques dans un contexte familial.

Ainsi qu'il apparaîtra de la description qui suit, les modes de réalisation du casse-noix proposé font usage de deux systèmes vis-écrou coaxiaux. Un système vis-écrou est un mécanisme de transformation de mouvement utilisé pour convertir un mouvement rotatif en mouvement linéaire (ou vice versa). Il se compose d'une vis (ou tige filetée) et d'un écrou, liés entre eux par une liaison hélicoïdale dont l'un est l'organe menant et l'autre est l'organe mené, et donc l'un seulement est bloqué en translation suivant l'axe longitudinal de la vis. Ce système de conversion de mouvement est précis, peut supporter des charges importantes et offre une répétabilité élevée. Il est couramment utilisé dans les machines-outils, les mécanismes de levage, les presses, et les systèmes de positionnement et d'autres applications industrielles où un mouvement linéaire précis est requis.

Il existe deux types de système vis-écrou, qui effectuent des conversions de mouvement différentes :
- dans un premier type de système vis-écrou, la vis est l'organe menant et l'écrou est l'organe mené. L'écrou est guidé en translation seulement, en étant bloqué en rotation. Inversement, la vis peut tourner autour de son axe principal mais est bloquée en translation suivant cet axe. Dans ce cas un mouvement de rotation imprimé à la vis est converti en un déplacement linéaire de l'écrou suivant l'axe de la vis ; alors que,
- dans un second type de système vis-écrou, c'est l'inverse : l'écrou est l'organe menant et la vis est l'organe mené. L'écrou est guidé en rotation seulement, en étant bloqué en translation. Inversement, la vis est guidée en translation et bloquée en rotation. Dans ce cas, un mouvement de rotation de l'écrou est converti en un déplacement linéaire de la vis.

Dans le casse-noix proposé, un premier système vis-écrou du premier type ci-dessus est utilisé pour entraîner en déplacement linéaire (translation) un élément appelé "piston broyeur", configuré en tant qu'écrou mené, dès lors qu'un contact franc est établi entre ledit piston broyeur et la coque d'une noix à casser. Dans ce premier système, le couple de rotation de la vis meneuse est fourni par l'axe d'entraînement d'un moteur électrique auquel la vis est liée. Il s'ensuit que l'énergie électrique fournie au moteur pour faire tourner son axe d'entraînement, et donc la vis qui lui est liée, est convertie en énergie mécanique du piston broyeur pour le faire avancer longitudinalement afin de briser la coque de noix sans effort pour l'utilisateur. La personne de métier appréciera que ce premier système constitue, avec le moteur électrique, un vérin électrique. Un vérin électrique est un dispositif qui utilise un moteur électrique pour générer un mouvement linéaire. Il peut intégrer un système vis-écrou pour convertir le mouvement rotatif du moteur en un mouvement linéaire de l'élément mené, offrant ainsi une solution précise et avec un contrôle fin grâce à l'utilisation de l'électricité. Dans l'application, l'énergie électrique absorbées par le moteur électrique fournit l'effort nécessaire au cassage de la noix.

De plus, et de manière supplémentaire, le casse-noix proposé comprend un autre système vis-écrou, en l'occurrence un système du second type défini plus haut. Ce second système vis-écrou est configuré pour déplacer linéairement l'ensemble du premier système vis-écrou (qui, de ce fait, est appelé "ensemble mobile" dans la suite), en agissant manuellement sur une poignée rotative configurée en tant qu'écrou menant. Ce second système vis-écrou a pour fonction de prépositionner le piston broyeur de l'ensemble mobile en le rapprochant de la coque de la noix à casser, jusqu'à établir le contact franc précité entre ledit piston broyeur et ladite coque de la noix à casser.

Le premier système vis-écrou et le second système vis-écrou du casse-noix selon les modes de réalisation proposés sont dits coaxiaux en ce sens que leurs vis respectives sont coaxiales, en l'occurrence leurs axes longitudinaux respectifs coïncidant avec l'axe longitudinal du boîtier du casse-noix.

Cette combinaison des deux systèmes vis-écrou fournit l'avantage que la commande du vérin électrique du premier système vis-écrou est simple et fiable, grâce au pré-positionnement du piston broyeur obtenu au préalable, manuellement, avec le second système vis-écrou. En particulier, cette commande est la même quelle que soit la taille des fruits à coque à casser et quelle que soit leur orientation devant le piston broyeur.

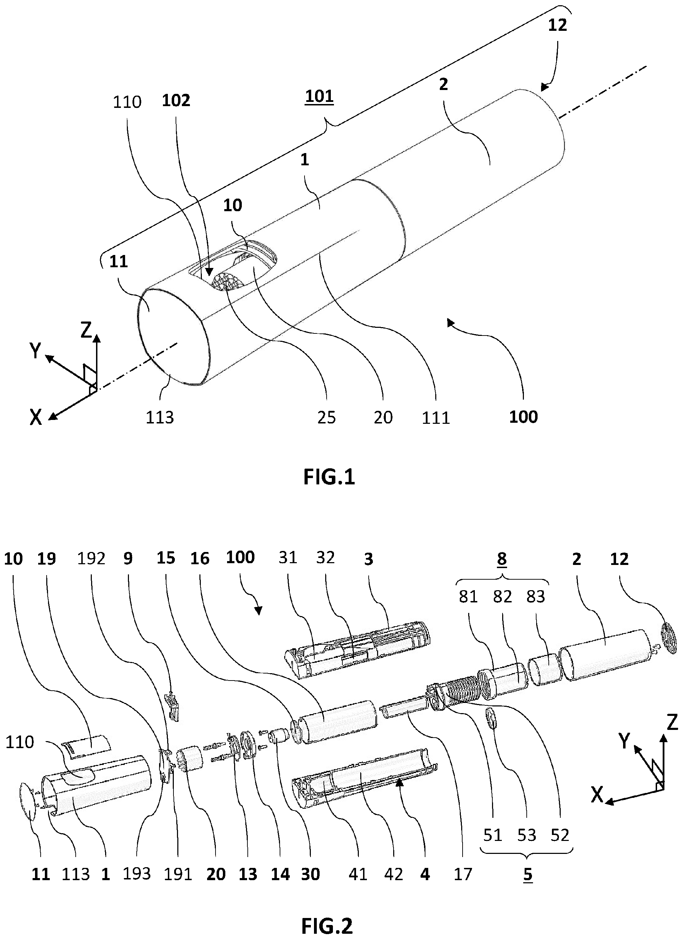

En référence à la Figure 1, le casse-noix 100 comporte un boîtier allongé 101, de forme sensiblement cylindrique, s'étendant suivant une direction longitudinale déterminée. Un logement de fruit 102 (ou logement de noix) est agencé à l'avant du boîtier 101, pour recevoir le fruit à coque dure à casser. Une partie avant 1 du boîtier 101 comprend une lumière formant une ouverture 110 du boîtier au droit du logement de fruit 102, par laquelle le fruit à coque à casser peut être introduit dans le logement de fruit 102.

On définit ici, pour la suite de la description, un repère direct tridimensionnel et orthogonal {X,Y,Z}, où l'axe vertical Z, correspondant à la direction de la gravité terrestre est orienté de manière sensiblement orthogonale à l'ouverture 110 du boîtier 101 du casse-noix 100, et où l'axe longitudinal X est orienté suivant la direction d'extension longitudinale dudit boîtier 101. L'axe transversal Y définit, avec l'axe longitudinal X, un plan horizontal (X,Y) qui est perpendiculaire à la direction de l'axe vertical Z. Le plan (Y,Z) qui est perpendiculaire à la direction longitudinale X est appelé "plan transversal".

Dans la suite de la description, les termes "vertical" et "verticalement" s'entendent comme étant relatifs à une orientation sensiblement parallèle à l'axe Z, et les termes "horizontal" et "horizontalement" comme étant relatifs à une orientation sensiblement parallèle au plan (X,Y). Par ailleurs, les termes "dessus" et "dessous" ainsi que leurs dérivés (comme "au-dessus" et "au-dessous", ou "par-dessus" et "par-dessous"), ainsi également que les termes "inférieur" et "supérieur", utilisés pour qualifier un élément constitutif du casse-noix ou sa position ou son orientation par rapport à d'autres éléments du casse-noix, s'entendent comme étant relatifs à un positionnement croissant vers le haut, i.e., suivant la direction verticale Z orientée vers le haut, c'est-à-dire avec l'ouverture 101 de la partie avant 1 du boîtier 101 du casse-noix 100 tournée vers le haut, comme montré à la Figure 1.

En outre, le terme "avant" et "arrière" ainsi que leurs dérivés (comme "en-avant" et "en-arrière", ou "à l'avant" et "à l'arrière", ou encore "vers l'avant" ou "vers l'arrière"), ainsi également que les termes "devant" et "derrière", utilisés pour qualifier la position ou le déplacement d'un élément constitutif du casse-noix ou bien encore son orientation par rapport à d'autres éléments du casse-noix, s'entendent comme étant relatifs à la direction longitudinale X du boîtier 101 du casse-noix 100 orientée d'arrière en avant, c'est-à-dire avec l'ouverture 110 de la partie avant 1 du boîtier 101 du casse-noix 100 disposée en avant de la partie arrière 2, comme montré à la Figure 1.

Enfin, les termes "côté" et "latéral" ainsi que leurs équivalents et dérivés (comme et "à-côté", "sur le/un côté" ou "latéralement", ainsi également que les termes "droite" et "gauche" et leurs dérivés, utilisés pour qualifier un élément constitutif du casse-noix ou sa position ou son orientation par rapport à d'autres éléments du casse-noix, s'entendent comme étant relatifs à un positionnement croissant suivant la direction transversale Y du boîtier 101 du casse-noix 100 orientée comme montré à la Figure 1 de manière que les axes X, Y et Z du repère tridimensionnel {X,Y,Z} forment un trièdre direct.

La personne de métier appréciera que les termes ci-dessus, relatifs à la position, au déplacement et à l'orientation dans l'espace sont destinés à englober différentes orientations du casse-noix en cours d'utilisation, en plus de l'orientation représentée sur la Figure 1. Le casse-noix peut en effet être orienté différemment (c'est-à-dire tourné dans d'autres orientations autour d'un ou plusieurs des axes X, Y et Z), et les termes descripteurs relatifs au repère tridimensionnel {X,Y,Z} de l'espace qui sont utilisés dans la présente description selon la convention ci-dessus, peuvent et doivent être interprétés en conséquence.

On va maintenant définir sommairement, en référence à la vue éclatée de la Figure 2, les principaux éléments constitutifs du casse-noix 100. Ces éléments seront ensuite détaillés, en dehors de ceux de l'enveloppe externe du boîtier 101 qui ont déjà été décrits dans ce qui précède et qui comprennent : la partie avant 1 ou manchon, la partie arrière 2 ou poignée, la trappe 10 de fermeture du logement de fruit 102 (cf. Figure 1), le capot avant 11 et le capot arrière 12.

Le bâti interne du boîtier 1 du casse-noix 100 est par exemple formé de deux parties 3 et 4 complémentaires, qui s'étendent chacune suivant la direction longitudinale X. Un plan horizontal médian définit la limite de séparation entre ces deux parties, à savoir une partie supérieure 3 et une partie inférieure 4. Les deux parties 3 et 4 du bâti sont assemblées l'une sur l'autre via une interface de jonction qui est essentiellement comprise dans le plan horizontal médian précité. Ces parties peuvent être fixées l'une à l'autre, par exemple par des vis orientées transversalement. Elles sont partiellement évidées ainsi qu'il sera détaillé plus bas, notamment pour former le logement de fruit 102 (cf. Figure 1).

Le casse-noix 100 comprend un premier système vis-écrou (premier système vis-écrou), ici d'axe longitudinal. Ce premier système vis-écrou comprend le piston broyeur 20 qui a déjà été présenté plus haut, en tant qu'écrou du système vis-écrou. Cet écrou 20 est entraîné en translation dans le boîtier 101 suivant la direction longitudinale X dudit boîtier 101 par un vérin électrique, à savoir plus particulièrement un vérin électrique linéaire comprenant :
- une première vis 30, et
- un moteur électrique 16 d'entraînement en rotation de la vis 30, ledit moteur électrique étant alimenté par une batterie électrique 17 d'alimentation électrique.

Dans ce premier système vis-écrou électrique, la vis 30 est l'organe menant et l'écrou 20 est l'organe mené.

Le casse-noix 100 comprend en outre un second système vis-écrou (second système vis-écrou), également d'axe longitudinal, donc coaxial avec le premier système vis-écrou 30,20. Ce second système vis-écrou comprend un écrou 8 solidaire de la poignée 2 qui a déjà été présentée plus haut, en tant qu'écrou du système vis-écrou. Lorsque la poignée 2 est manipulée en rotation, *i.e.,* entraînée en rotation à la main, cet écrou 8 entraîne une vis 5en translation suivant la direction longitudinale X dudit boîtier 101. Cette vis 5 fait partie d'un ensemble mobile dont elle est solidaire, lequel est donc tout entier entraîné en translation avec elle.

On peut prévoir que le filet 31 de la première vis-sans-fin 30 présente un pas et un diamètre qui sont différents du pas et du diamètre, respectivement, du filet 50 de la seconde vis-sans-fin vis 5. Ainsi, un découplage des mouvements de rotation de ces deux vis est obtenu. En particulier, la mise en rotation par le moteur électrique de la première vis-sans-fin 30 par rapport au reste de l'ensemble mobile 103 ne provoque pas la rotation de la seconde vis-sans-fin 5 dans l'écrou 8 lié à la poignée 2, qui tendrait à faire reculer l'ensemble mobile 103 vers l'arrière du boîtier 101 par réaction mécanique du piston 20 contre la paroi avant du logement de fruit 102 via la noix à casser. Dit autrement, l'énergie électrique fournie au moteur est intégralement convertie (aux forces de frottement près) en un mouvement de translation longitudinale du piston broyeur 20 vers l'avant, qui est le mouvement utile à l'opération de cassage de la noix.

La commande électronique du casse-noix 100 fait intervenir divers composants qui, dans les modes de réalisation proposés, sont répartis sur trois circuits imprimés (ou PCB, de l'anglais "*Printed Circuit Board*"). Ces circuits imprimés sont agencés dans des plans transversaux respectifs, en différents endroits dans le boîtier 101.

Ces circuits imprimés comprennent un premier circuit imprimé 19, ou circuit imprimé avant, qui est agencé à l'avant du boîtier 101, en avant du logement de fruit 102 et de manière solidaire avec le bâti 3,4. Ce circuit imprimé 19 porte :
- l'interrupteur 191 de déclenchement de la commande du vérin électrique du premier système vis-écrou 30,20, qui est un interrupteur à contact dans l'exemple considéré ici,
- le détecteur 192 de fermeture de la trappe 10 du boîtier 101, qui dans l'exemple est un interrupteur à contact, et,
- la prise 193 de recharge de la batterie électrique 17, qui dans l'exemple est une prise USB-C normalisée.

Le casse-noix 100 comprend un levier de déclenchement 9, agencé à l'avant du logement de fruit 102, et qui est configuré pour activer l'interrupteur de déclenchement 191 en réponse à un appui franc du piston broyeur 20 sur la coque d'un fruit à coque présent dans le logement de fruit 102. Cette activation de l'interrupteur de déclenchement 191 déclenche la commande du moteur électrique 16 du vérin électrique formé par le premier système vis-écrou 30,20.

La commande électronique comprend en outre un deuxième circuit imprimé 13 et un troisième circuit imprimé 15 qui, contrairement au premier circuit imprimé 19, font tous deux parties de l'ensemble mobile.

Le deuxième circuit imprimé 13 est agencé entre le moteur électrique 16 et le piston-broyeur 20, en étant par exemple fixé sur la face avant du corps dudit moteur. Il porte un interrupteur de fin de course agencé sur sa face avant, qui est par exemple un interrupteur à contact tourné vers le piston broyeur 20. Il est actionné par l'arrière du piston broyeur 20, lorsque celui-ci est déplacé, après une opération de cassage accomplie, suivant la direction longitudinale X vers l'arrière en faisant tourner la poignée en sens inverse, afin de détecter le retour du piston broyeur à sa position de repos.

Le troisième circuit imprimé 15 est agencé entre le moteur électrique 16 et la batterie 17, en étant par exemple fixé sur la face arrière du corps dudit moteur. Il porte notamment un calculateur en circuit intégré, comme un microcontrôleur, qui assure la commande du moteur électrique 16 ainsi que la gestion de la charge de la batterie, notamment.

Les différents éléments constitutifs du casse-noix 100 vont maintenant être décrits plus en détails, dans des sections respectives dédiés à des éléments regroupés sur la base de la fonction technique qu'ils remplissent dans le casse-noix. La personne de métier appréciera que, en dépit du soin et de l'attention mis à rationnaliser ces regroupements en sections distinctes, la parfaite compréhension de l'agencement et/ou du fonctionnement de certains éléments peut nécessiter de se référer à plusieurs de ces sections, du fait des interactions structurelles et/ou fonctionnelles entre certains éléments. Inversement, l'ensemble global de l'exposé donné dans ce qui suit peut comporter, de façon inhérente, certaines répétitions d'une section à l'autre, qui sont nécessaires à la clarté des indications données dans chacune de ces sections.

### Enveloppe externe du boîtier

En référence de nouveau à la Figure 1, le boîtier 101 constitue l'enveloppe externe du casse-noix 100. Il est allongé, et a plus particulièrement une forme sensiblement cylindrique s'étendant suivant la direction longitudinale X.

Le boîtier 101 enferme :
- le bâti interne (non visible à la figure) ; et
- un logement de fruit 102, agencé à l'avant du boîtier 101, pour recevoir le fruit à coque dure à casser à travers une ouverture 110 prévue sur le dessus de la partie avant 1 dudit boîtier ;
- l'écrou du second système de vis-sans-fin (non visible à la figure), qui est lié à la partie arrière 2 du boîtier formant le manche rotatif ; et,
- l'ensemble mobile (dont seul le piston broyeur 20 est partiellement visible à la figure, dans le logement de fruit 102), qui est entraîné en translation dans le boîtier 101 suivant la direction longitudinale X par le vérin électrique. On rappelle que ce vérin électrique comprend une première vis-sans-fin et un moteur électrique d'entraînement de ladite vis-sans-fin, alimenté par une batterie électrique.

Une enveloppe externe du boîtier 101 enferme un bâti interne (non visible à la Figure 1). Cette enveloppe externe est réalisée en au moins deux parties, avec une partie avant 1, d'une part, et une partie arrière 2, d'autre part. La partie avant est solidaire du bâti précité. Inversement, la partie arrière 2 est mobile, en rotation seulement, par rapport audit bâti. Elle forme une poignée rotative, qui peut être manœuvrée en rotation par rapport audit bâti.

La partie avant 1 de l'enveloppe externe du boîtier 101 comprend l'ouverture 110, laquelle vient au droit du logement de fruit 102. Le logement de noix 102 est de forme et de dimensions adaptées pour recevoir la noix ou tout autre fruit à coque dure à casser. Et l'ouverture 110 est de forme et de dimensions adaptées pour permettre l'insertion d'une noix dans le logement de fruit 102. La noix est en effet insérée dans ledit logement 102, en la faisant entrer par l'ouverture 110. Cette opération de chargement du casse-noix avec une noix à casser est effectuée par l'utilisateur, alors que le logement de noix 102 est vide. L'ouverture 110 permet également le retrait des morceaux comestibles du fruit et l'évacuation des débris de la coque brisée, pour vider le logement 102 après le cassage de la coque du fruit. Cette opération de déchargement du casse-noix est également effectuée par l'utilisateur, par exemple en retournant le casse-noix, *i.e.,* en le faisant tourner manuellement de 180° autour de l'axe longitudinal X.

L'axe de l'ouverture 110 suivant lequel, sensiblement, la noix est introduite dans ledit logement 102 à travers l'ouverture 110, coïncide avec un axe du logement de noix 102. A la Figure 1, l'ouverture 110 du boîtier 101 est tournée vers le haut, ou plutôt le casse noix 100 est orienté de telle manière que l'axe de ladite ouverture 110 à travers le boîtier 101 est orienté suivant la verticale (direction de la gravité terrestre). L'ouverture 110 fait alors déboucher le logement de noix 102 vers le haut, *i*.*e*., vers le plafond de la pièce (cuisine, salle à manger, etc.), ou vers le ciel.

Dans des modes de réalisation, la partie avant 1 de l'enveloppe externe du boîtier 101 comprend une trappe mobile 10 conçue et agencée pour permettre la fermeture du logement de fruit 102, c'est-à-dire pour obturer l'ouverture 110 de manière réversible. Par exemple, la trappe 10 est montée coulissante suivant la direction longitudinale X, dans les deux sens, entre une position complètement ouverte en arrière, d'une part, et une position complètement fermée en avant, d'autre part. Par exemple, la trappe est supportée par des moyens de guidage formés dans la partie supérieure du bâti interne (non visible à la figure), immédiatement sous la face interne de la partie supérieure de la partie avant 1 du boîtier 101, laquelle est fixe par rapport audit bâti. La trappe mobile 10 a pour fonction de fermer le logement de noix une fois chargée avec une noix à casser, de sorte que la projection en tous sens de débris de la coque lors du cassage de la coque est évitée. Dans des modes de réalisation, un détecteur de fermeture de la trappe, par exemple un interrupteur à contact, peut être utilisé pour empêcher l'activation du vérin électrique du casse-noix en cas de non-fermeture de la trappe 10 (voir plus bas). Ainsi, l'utilisateur ne peut utiliser l'assistance électrique du casse-noix alors qu'un doigt, par exemple, est encore présent dans le logement de fruit. Tout risque de blessure par pincement d'un doigt de l'utilisateur est ainsi évité.

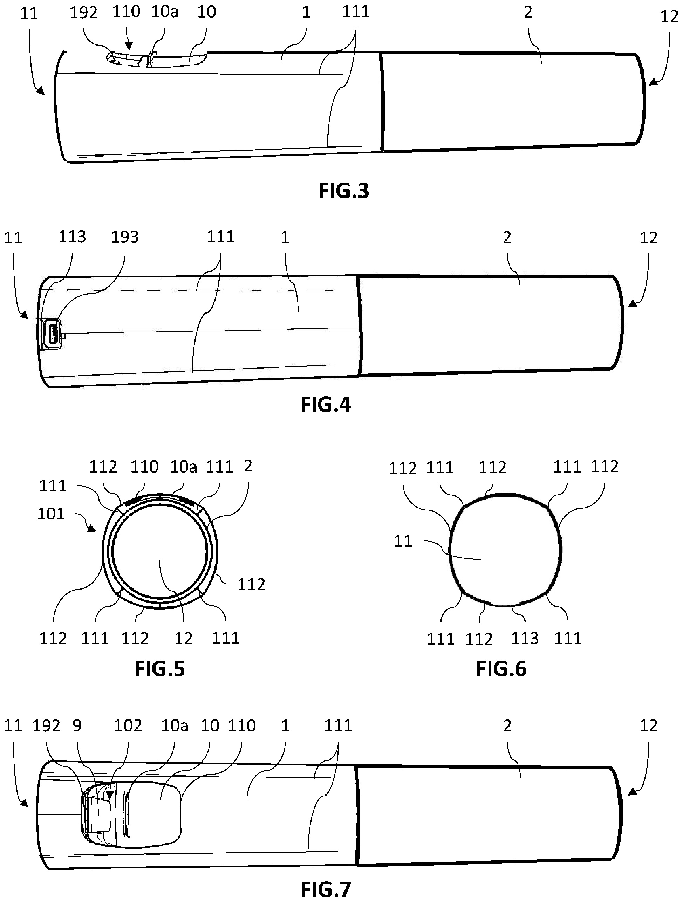

Dans l'exemple illustré à la Figure 1, la trappe mobile 10 est représentée dans sa position complètement ouverte. Dans la vue de face du casse-noix montrée à la Figure 3 et dans la vue de dessus du casse-noix qui est montrée à la Figure 7, par contre, la trappe 10 est représentée dans une position intermédiaire (partiellement ouverte ou partiellement fermée) entre sa position complètement ouverte montrée à la Figure 1 et sa position complètement fermée à l'avant de l'ouverture 110.

La trappe 10 peut avoir un profil convexe, en coupe, avec une courbure sensiblement égale à celle de la partie avant 1 de l'enveloppe externe du boîtier 101 au niveau de l'ouverture 110. Elle présente des moyens de guidage en translation suivant la direction longitudinale X, par exemple des languettes d'extension longitudinale formant des rails de guidage en translation, réalisées de matière avec la face interne de la trappe. Ces languettes coopèrent avec des moyens de guidage en translation associés du bâti interne au boîtier 101.

Dans un mode de réalisation, la face supérieure de la trappe 10 comprend une barrette de préhension 10a, pour permettre à l'utilisateur de faire coulisser la trappe 10 en la poussant vers l'avant ou en la tirant vers l'arrière, par exemple avec le pouce, pour la déplacer vers l'avant depuis sa position complètement ouverte à l'arrière, ou vers l'arrière depuis sa position complètement fermée à l'avant, le cas échéant. La barrette de préhension 10a s'étend par exemple transversalement, suivant la direction de l'axe Y, en suivant la courbure de la trappe 10. Dans un mode de réalisation, et comme montré en particulier sur la vue de-dessus de la Figure 7, la barre 10a a de préférence une largeur qui correspond sensiblement (par valeurs inférieures) à la plus petite largeur de l'ouverture 110, ces largeurs étant appréciées suivant la direction transversale de l'axe Y et en tenant compte de la courbure de la trappe 10. La hauteur d'extension de la barrette à partir de la face supérieure de la trappe 10 suivant la direction verticale de l'axe Z est de quelques millimètres (mm), par exemple comprise entre 1 mm et 5 mm, de préférence entre 1 mm et 3 mm.

Dans un mode de réalisation conforme à la représentation donnée à la Figure 3, la hauteur de la barrette est telle que la barrette ne dépasse pas verticalement, *i.e.,* ne s'étende pas vers le haut au-delà du point maximum (apex) du profil de l'enveloppe externe du boîtier 101 suivant la direction transversale Y compte tenu de la courbure de la partie avant 1 du boîtier. De cette manière, on réduit le risque d'accrochage involontaire de la trappe par l'intermédiaire de la barrette 10a, qui pourrait causer une ouverture involontaire de la trappe. Ceci peut être obtenu, par exemple, en limitant la hauteur de la barrette à l'épaisseur de la partie avant 1 du boîtier au niveau de l'ouverture 110, puisque la trappe glisse, dans cette zone, sous la face inférieure (face interne) de cette partie avant 1 du boîtier 101.

La barrette 10a peut être formée d'un seul tenant avec la trappe 10, en étant réalisée de matière avec ladite trappe par exemple par moulage d'une pièce par injection de matière plastique.

La partie avant 1 du boîtier 101 est par exemple un manchon unitaire, *i.e.,* réalisé d'un seul tenant. Dans des modes de réalisation, sa section arrière est circulaire, mais sa section avant n'est pas exactement circulaire. Pour des raisons de design mais pas uniquement, le manchon comprend en effet, du côté avant sa surface externe (et pareillement sa surface interne) par exemple quatre lignes d'arrêtes 111 qui s'étendent longitudinalement suivant la direction de l'axe X. Ces lignes longitudinales 111 séparent la partie avant 1 de l'enveloppe externe du boîtier 101, au niveau de la portion avant de ce manchon, en une pluralité de sections circonférentielles en forme de tuiles 112. La courbure des tuiles 112 est supérieure au rayon du cercle de la section arrière du manchon 1. Dit autrement, l'enveloppe externe du boîtier 101 a un profil en coupe dans un plan de coupe transversal à l'avant de la partie avant 1 dudit boîtier, comprend par exemple quatre sommets formés par ces arrêtes longitudinales 111. A mesure que le plan de coupe transversal considéré s'éloigne du plan de l'extrémité avant de la partie avant 1 du boîtier 101, en direction de l'extrémité arrière du manchon formant ladite partie avant 1, les rayons de courbure des quatre tuiles diminuent progressivement de sorte que, à l'extrémité arrière dudit manchon, les quatre tuiles sont fondues en quatre sections circulaires de même rayon qui est le rayon de la forme circulaire qu'affecte la partie avant 1 dans un plan de coupe transversal à ladite extrémité arrière du manchon.

Moyennant quoi, sur la portion avant du manchon 1 il y a quatre tuiles 112 adjacentes circonférentiellement et jointives deux-à-deux. Le profil de ces tuiles 112 est particulièrement visible sur la Figure 5 et sur la Figure 6, qui montrent le boîtier 101 en vue de droite et en vue de gauche, respectivement.

En référence à la vue de dessus du casse-noix montrée à la Figure 7, l'une des tuiles, à savoir la tuile supérieure entre les deux arrêtes longitudinales 111 visibles sur la figure, comprend l'ouverture 110 d'accès au logement de noix 102 déjà mentionné plus haut. Sur cette figure, on notera que la trappe 110 est représentée partiellement fermée, environ aux deux tiers. Encore à quelque distance de l'interrupteur 192 de détection de fermeture, agencé à l'avant du boîtier 101. Cette figure montre également le levier 9, agencé à l'avant du logement du logement de fruit 102, dans ledit logement, et sur lequel on reviendra plus loin.

Dans un mode de réalisation, la tuile opposée, à savoir la tuile inférieure, comprend une encoche 113 à son extrémité avant, pour exposer une prise USB-C (partie femelle) et permettre d'y raccorder une fiche USB-C (partie mâle) complémentaire, afin de recharger la batterie électrique du casse-noix 100. La prise 193 est visible, en particulier, sur la Figure 4, laquelle montre une vue de dessous du boîtier du casse-noix 100. La figure montre les deux arrêtes longitudinales 111 qui définissent la tuile inférieure en question.

La personne de métier appréciera que, en raison de la forme aplatie des tuiles qui composent l'enveloppe extérieure du boîtier 101 au niveau de l'avant de la partie avant 1 dudit boîtier, le casse-noix peut naturellement reposer "à plat" sur un plan de travail ou sur une table, c'est-à-dire sans rouler autour de son axe longitudinal X. En fonction du balourd éventuel du casse-noix 100 et/ou en choisissant un rayon de courbure de la tuile inférieure (celle qui comprend l'encoche 111 à la Figure 1) qui soit supérieur à celui des autres tuiles, on peut faire en sorte que le casse-noix repose à plat sur ladite tuile inférieure, avec l'ouverture 110 tournée vers le haut lorsqu'il est déposé sur le plan de travail ou la table. Le balourd du casse-noix dépend notamment de la position du moteur et/ou de la batterie dans un plan transversal, notamment de leur position suivant la direction verticale par rapport au plan horizontal médian, car ce sont les éléments *a priori* les plus lourds logés dans le boîtier 101. Il dépend aussi de la répartition de la masse des éléments du boîtier lui-même, notamment de la partie avant 1, qui peut être plus dense que la partie arrière 2 formant la poignée rotative.

La position de repos à plat du casse-noix 100 qui est indiquée au paragraphe ci-dessus a plusieurs avantages. D'une part elle permet que le casse-noix ne repose pas sur la trappe 110, ce qui la protège en cas de déplacement du casse-noix par glissement sur le plan de travail ou sur la table, ou en en cas d'appui contre ces supports exercé verticalement du haut vers le bas sur une autre partie du casse noix posé, par exemple si l'on dépose un autre objet sur la poignée rotative 2 ou que l'on y exerce une pression du haut vers le bas avec la main ou autrement. D'autre part, l'orientation du casse-noix au repos avec l'ouverture tournée vers le haut permet l'insertion d'une nouvelle noix à casser sans même avoir besoin de saisir le casse-noix entre les mains pour le tourner afin d'accéder au logement de noix 102. Dans tous les cas, la saisie du casse-noix s'effectue toujours à partir d'une même disposition angulaire du casse-noix reposant à plat sur un plan de travail ou sur une table, ce qui est favorable à l'expérience des utilisateurs.

Selon un autre avantage, l'espace creux formé par les arrêtes longitudinales 111 dans la portion avant du manchon 1, entre le bâti interne et la face interne de l'enveloppe externe, permet de faire passer des fils électriques ou d'autres conducteurs électriques (nappe flexible, lame conductrice ou barreau conducteur, etc.), pour raccorder un ou plusieurs accessoires électriques logés à l'avant du boîtier 101 à d'autres éléments électrique ou électrique logé plus en arrière. Les accessoires électriques en question peuvent comprendre, par exemple, la prise USB-C à raccorder à la batterie électrique logée plus en arrière dans le boîtier 101, et l'interrupteur de détection de fermeture de la trappe 10 ainsi qu'un interrupteur de déclenchement de la commande du vérin électrique à raccorder à une unité de commande électronique également logée plus en arrière dans le boîtier 101.

On notera que l'invention n'est pas limitée par le nombre ni par la répartition angulaire des lignes longitudinales 111 sur l'enveloppe externe du boîtier 101. Différentes configurations sont possibles afin de particulariser le casse-noix en relation notamment avec les fonctions techniques décrites ci-dessus, et/ou d'un point de vue esthétique également.

Comme montré à la Figure 1, le boîtier 101 peut comprendre un bouchon avant 11, adapté pour fermer par l'avant la partie avant 1 du boîtier. Un bouchon arrière 12 (non visible à la figure) peut également être prévu pour fermer par l'arrière la partie arrière 2 du boîtier qui forme la poignée rotative. Structurellement, ces bouchons 11 et 12 affectent sensiblement la forme de plaquettes amovibles s'étendant, lorsqu'elles sont montées à l'extrémité avant de la partie avant 1 et à l'extrémité arrière de la partie arrière 2, respectivement, du boîtier 101, dans un plan transversal respectif. Fonctionnellement, les bouchons permettent de supporter et/ou de dissimuler des éléments de fixation comme des vis, qui participent au montage entre eux des éléments constitutifs du casse-noix100.

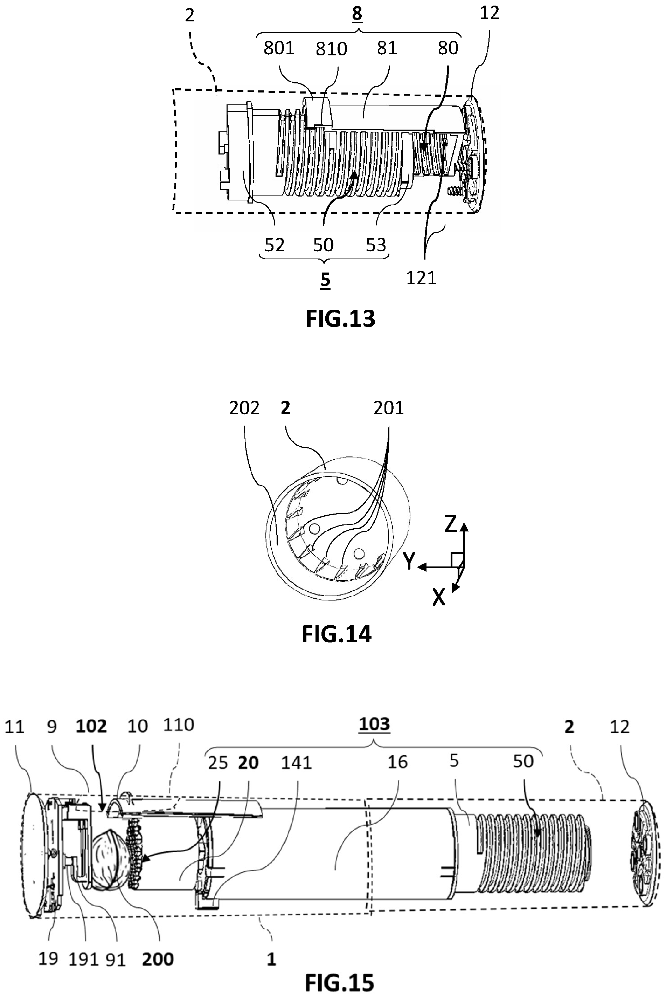

L'enveloppe externe du boîtier peut être en matériau "noble" et résistant, ces caractéristiques étant autorisées ou du moins facilitées par la forme relativement simple des deux parties essentielles qui la composent, à savoir la partie avant 1 et la partie arrière 2. La partie avant 1 est peut ainsi être réalisée en métal. Elle peut être fabriquée relativement facilement en une seule pièce, par usinage, par fonderie (moulage de métal), par fabrication additive, etc. En variante, elle peut aussi être réalisée en deux demi-pièces d'extension longitudinale qui sont ensuite assemblées par soudure, et recouvertes d'un revêtement de finition masquant le cordon de soudure. La partie arrière 2, quant à elle, est essentiellement un tube de diamètre constant, avec des nervures 201 d'extension longitudinale, effilées vers l'avant, qui sont angulairement réparties le long de la périphérie interne à l'arrière dudit manche 2 et sur lesquelles on reviendra plus loin en référence à la Figure 14. Ce tube peut être réalisé en matière plastique, par exemple par injection de plastique moulé. Le capuchon avant 11, le capuchon arrière 12 peut également être réalisée par injection de plastique moulé. Pour finir, la trappe 10 peut être réalisée en métal comme la partie avant 1, ou en plastique comme la partie arrière 2.

Hormis au niveau la fenêtre 110 d'accès au logement de fruit 102 (lorsqu'elle n'est pas fermée par la trappe de fermeture 10) et les arrêtes longitudinales 11 sur la partie avant, le cas échéant, la surface externe du boîtier 101 est lisse. Il n'y a pas de vis proéminente, ni de puits de vis susceptible d'accumuler des saletés, ni bague, etc. Le casse-noix est donc d'un entretien facile, et d'une utilisation agréable pour l'utilisateur.

### Bâti interne

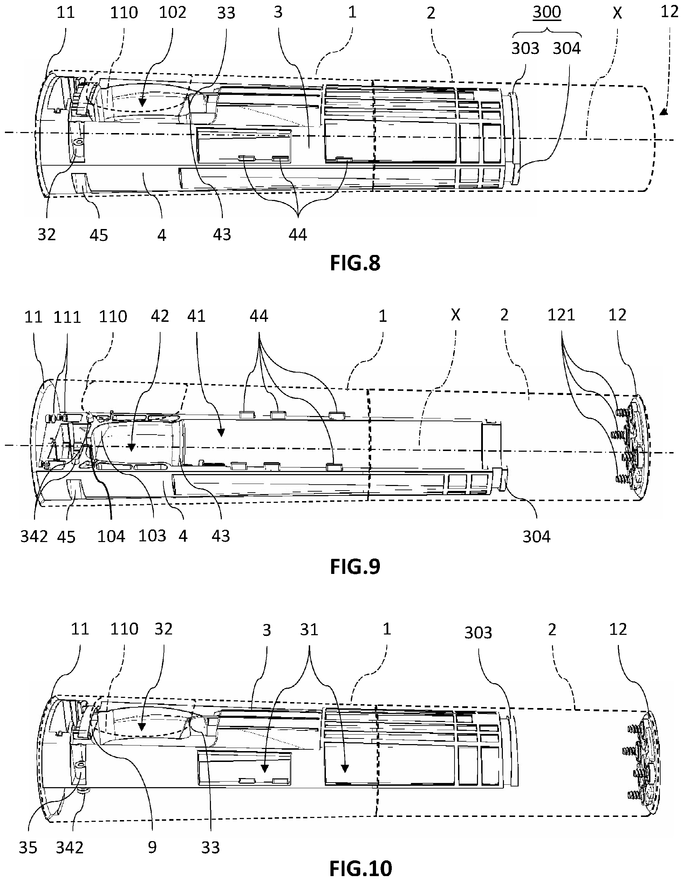

En référence aux vues en perspective tridimensionnelles de la Figure 8, de la Figure 9, et de la Figure 10, le bâti interne au boîtier 101 du casse-noix est en deux parties 3 et 4 complémentaires, partiellement évidées. Sur ces figures, la partie avant 1 et la partie arrière 2 du boîtier 101 sont représentées « en fantôme », pour montrer l'agencement desdites parties par rapport au bâti.

Les parties 3 et 4 sont chacune d'extension longitudinale, *i.e.,* elles sont allongées suivant la direction longitudinale X du boîtier 101. Comme montré à la Figure 8, elles sont assemblées l'une à l'autre via un plan de jonction qui est essentiellement un plan médian parallèle à l'axe longitudinal X du boîtier 101. Ce plan définit la limite entre la partie 3 dite partie "supérieure" et la partie 4 dite partie "inférieure" du bâti 3,4. Ces pièces sont de géométrie relativement complexe, mais sont facilement réalisables et à faible coût, par exemple en matériau plastique par injection de plastique moulé, ou par fabrication additive, par exemple par fabrication additive (impression 3D).

Le bâti est la référence "fixe" pour la description de tous les éléments mobiles du casse-noix. Comme le casse-noix est un dispositif portatif, il est en effet non lié au référentiel terrestre. C'est donc par rapport au bâti qu'il est défini un référentiel qui donne son sens à la terminologie employée dans la présente description, et notamment aux termes "fixe" et "mobile" utilisés en référence non seulement aux deux parties principales 1 et 2 de l'enveloppe externe du boîtier (dont la partie avant est fixée au bâtie alors que la partie arrière 2 est montée rotative par rapport audit bâti), mais également en référence à ce qui est appelé "l'ensemble mobile" et tous les autres composants du casse-noix.

Les divers éléments constitutifs du casse-noix peuvent être montés *(i.e.,* installés pour les éléments mobiles, et fixés pour les éléments fixes) dans le bâti préalablement à l'assemblage de ses deux parties 3 et 4 entre elles.

La partie supérieure 3 et la partie inférieure 4 du bâti sont reliées l'une à l'autre, par exemple par une ou plusieurs vis de fixation 342 (voir Figure 10) et/ou par une ou plusieurs languettes de positionnement et/ou d'encliquetage 44. Dans l'exemple illustré sur les figures, les vis de fixation 342sont vissées transversalement dans un puits interne 35 formé dans le bas de la partie supérieure 3, qui est accessible depuis un passage externe 45 formé dans le haut de la partie inférieure 4.

Comme montré à la Figure 10, la partie supérieure 3 du bâti comprend un premier évidement allongé 31 et, comme montré à la Figure 9, la partie inférieure 4 comprenant un premier évidement allongé complémentaire 41. Cette première paire d'évidements complémentaire 31 et 41 est configurée pour, lorsque la partie supérieure 3 et la partie inférieure 4 du bâti sont montées l'une sur l'autre suivant la direction Y orthogonale à la direction longitudinale X, former un tunnel de guidage 31,41 dans lequel l'ensemble mobile est guidé en translation vers l'avant à partir d'une position extrême en arrière, et vers l'arrière à partir d'une position extrême en avant. Dit autrement, le tunnel 31,41 assure le guidage en translation de l'ensemble mobile pour ses déplacements dans le bâti 3,4 en translation suivant la direction longitudinale X.

### Logement de fruit

En référence de nouveau à la Figure 8, les deux parties 3 et 4 du bâti interne forment aussi, lorsqu'elles sont assemblées comme montré à la figure, le logement de fruit 102 (ou compartiment de fruit), en avant du tunnel de guidage 31,41, qui est adapté pour recevoir le fruit à coque 200 à casser. A cet effet, la partie supérieure 3 du bâti comprend un second évidement 32 montré à la Figure 10, et la partie inférieure 4 dudit bâti comprend un second évidement complémentaire 42 montré à la Figure 9. Cette seconde paire d'évidements complémentaires 32 et 42 est configurée pour former ensemble le logement de fruit 102 lorsque la partie supérieure 3 et la partie inférieure 4 du bâti sont montées l'une sur l'autre suivant la direction Y orthogonale à la direction longitudinale X. Les évidements 32 et 42 sont alors alignés et en regard l'un de l'autre suivant la direction radiale Y. Les parois internes des évidements 32 et 42 sont concaves, de sorte que la forme générale du logement de fruit 102 ainsi formé est sensiblement ovoïde.

Par ailleurs, une fois que les deux parties 3 et 4 du bâti sont assemblées l'une à l'autre et une fois que la partie avant 1 du boîtier 101 est agencée sur le bâti 3,4 ainsi assemblé, les évidements 32 et 42 sont en outre alignés, suivant la direction radiale Y, avec l'ouverture 110 prévue dans la partie avant 1 de l'enveloppe externe du boîtier représentée en fantôme sur la Figure 8, la Figure 9 et la Figure 10. On notera que l'évidement 32 est ouvert vers le haut, pour permettre l'entrée du fruit à coque à casser avant l'opération de cassage, et pour permettre la sortie des cerneaux de noix et des débris de la coque après ladite opération, à travers l'ouverture 110 du boîtier.

La forme et les dimensions du logement de fruit 102 formé par les évidements 32 et 42, ainsi que la forme et les dimensions de l'ouverture 110 dans la paroi avant 1 du boîtier, sont adaptées pour permettre audit logement 102 de recevoir un fruit à coque dure à casser. Des consignes d'utilisation fournies aux utilisateurs préconiseront de n'insérer qu'un seul fruit à coque à la fois dans le logement 102 quelle que soit sa taille, pour un meilleur fonctionnement du casse-noix.

La personne de métier appréciera que, suivant la direction longitudinale X, le tunnel 31,41 de guidage de l'ensemble mobile débouche dans le logement de fruit 32,42 afin que le piston broyeur 20, qui est l'élément en tête, à l'avant dudit ensemble mobile, puisse venir en engagement avec la coque du fruit à coque à casser se trouvant dans ledit logement. Un alésage suivant l'axe longitudinal X est prévu dans un épaulement radial 43 séparant le tunnel 31,41 du côté arrière et le logement de noix 32,42 du côté avant.

L'interrupteur de déclenchement 191, qui est chargé de déclencher le fonctionnement du moteur électrique 16 lorsque le piston broyeur 20 réalise un contact franc avec la noix à casser présente dans le logement de noix 102, est agencé à l'avant dudit logement.

Avantageusement, le sens de fermeture de la trappe 10 est choisi de l'arrière vers l'avant, ce qui permet à l'interrupteur de détection de fermeture 191 d'être agencé à l'avant du boîtier 101, idéalement sur le même circuit imprimé que l'interrupteur de déclenchement du moteur, à savoir le circuit imprimé avant 19 de la Figure 2.

### Ensemble mobile

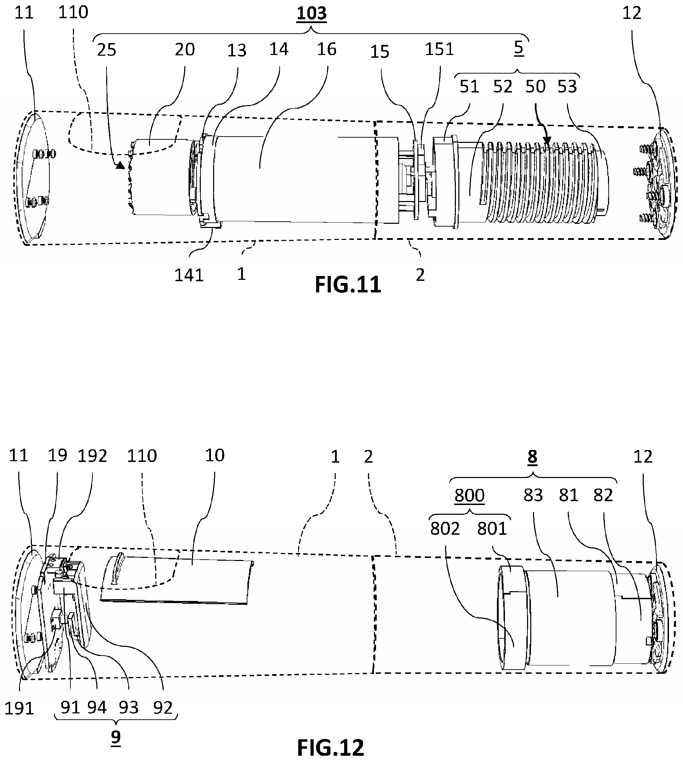

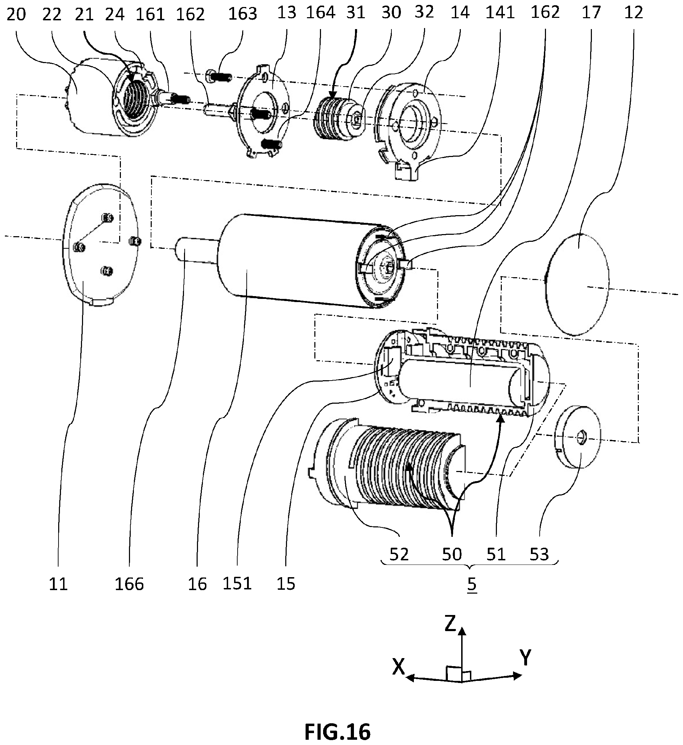

En référence à la vue de côté de la Figure 11 ainsi qu'à la vue éclatée de la Figure 16, l'ensemble mobile 103 comprend principalement les éléments suivants :
- le piston broyeur 20, qui constitue l'élément actif durant l'opération de cassage en ce sens qu'il a pour fonction de briser la coque du fruit à coque à casser, et qui est mû à cette fin durant la phase assistée de l'opération par un vérin électrique d'axe longitudinal formé des autres éléments de l'ensemble mobile ci-après ;
- la vis 5 qui est l'élément mené du deuxième système vis-écrou (entraîné en translation par la rotation manuelle de la poignée 2, laquelle ne fait pas partie de l'ensemble mobile puisqu'elle est fixe en translation) ;
- le moteur électrique 16 fournissant l'énergie mécanique d'assistance pour le cassage de la coque du fruit ;
- la batterie électrique 17 (avantageusement logée dans la vis 5 comme montré à la Figure 16) ; et,
- une partie de l'électronique de commande, supportée par :
   - le circuit imprimé 13 qui est fixé sur la face avant de la carcasse du moteur électrique 16 à travers l'entretoise transversale 14 ; et,
   - le circuit imprimé 15 qui est fixé sur la face arrière de la carcasse dudit moteur 16.

C'est le caractère mobile en translation longitudinale, par rapport au bâti, de tous les éléments composant cet ensemble 103 qui permet le pré-positionnement manuel du piston broyeur 20 et de son vérin électrique associé, en contact franc avec le fruit à coque logé dans le logement 102. Grâce à ce réglage de position préalable au déclenchement de l'assistance électrique, la commande électrique du mouvement vers l'avant du piston broyeur 20 peut être très simple. Surtout, elle est indépendante de la taille et de la forme spécifique du fruit à coque à casser qui a été logé dans le logement de fruit. Le casse-noix 100 peut en effet être utilisé pour casser tantôt des noix, tantôt des noisettes, et encore d'autres type de fruits à coque dure (comme des pistaches, des noix de cajou, etc.) qui ont des tailles moyennes différentes. Par ailleurs, même des fruits d'une variété identique présentent de façon inhérente une dispersion de taille et des différences de forme d'un spécimen à un autre.

Le mouvement de déplacement longitudinal (translation) vers l'avant de l'ensemble mobile 103 est actionné par le second système vis-écrou (second système vis-écrou comprenant la vis 5 et l'écrou 8), par une opération effectuée manuellement par l'utilisateur. Ceci permet le préréglage manuel du casse-noix. Cette manœuvre est identique au début de la manœuvre des casse-noix par pression qui comportent un simple système vis-écrou purement mécanique, tels qu'ils sont connus de longue date. Donc l'utilisateur conserve la sensation de réaliser lui-même, c'est-à-dire à la force seulement de sa poigne, le cassage de la noix. Mais sa manœuvre de la poignée rotative 2 effectuée à la main ne fait que provoquer le déclenchement de l'assistance électrique par le moteur électrique qui, en réalité, procure l'effort nécessaire au cassage de la coque du fruit (à travers son couple moteur). Dit autrement, pour obtenir le cassage effectif de la coque, c'est le moteur électrique 16 du vérin électrique qui prend le relais de l'utilisateur. Ce dernier n'a pas besoin d'exercer un effort véritable à cet effet, dès lors qu'il a prépositionné le piston broyeur en contact franc avec la coque du fruit à casser par la rotation de la poignée 2 du casse-noix.

Le piston broyeur 20, qui est l'élément le plus à l'avant de l'ensemble mobile, a au moins son plan avant 25 (doté de corrugations), qui se trouve dans le logement de fruit 102 en permanence, c'est-à-dire quelle que soit la position longitudinale de l'ensemble mobile par rapport au bâti et quelle que soit la position longitudinale du piston broyeur 20 par rapport à l'ensemble mobile durant la phase assistée de l'opération de cassage.

La course longitudinale de l'ensemble mobile 103 par rapport au bâti 3,4 du boîtier 102 est définie par la distance d'un déplacement complet de cet ensemble mobile en translation suivant la direction longitudinale X, vers l'avant à partir de sa position extrême en arrière lorsque le manche rotatif 2 est tourné manuellement par l'utilisateur dans un premier sens de rotation (par exemple le sens horaire), ou vers l'arrière à partir de sa position extrême en avant lorsque le manche rotatif 2 est tourné dans le sens de rotation inverse *(i.e.,* le sens anti-horaire dans l'exemple). Durant cette course longitudinale vers l'avant ou vers l'arrière de l'ensemble mobile 103, le piston broyeur 20 reste en contact glissant, par sa surface externe cylindrique, avec le bord interne de l'alésage circulaire formé par l'épaulement radial 43 entre le tunnel 31,41 de guidage de l'ensemble mobile, d'une part, et le logement de fruit 102 qui est formé par les évidements 32 et 42 dans les parties 3 et 4, respectivement, du bâti, d'autre part. Ainsi, durant la course longitudinale vers l'avant ou vers l'arrière de l'ensemble mobile 103 par rapport au bâti 3,4 du boîtier 101, le piston broyeur 102 (et donc tout l'ensemble mobile auquel il appartient) est guidé en translation par cet épaulement radial 43. Dit autrement, l'épaulement radial 43 qui forme une sorte de séparation entre le tunnel 31,41 et le logement de fruit 32,42 assure une fonction d'anneau de guidage en translation longitudinale, en s'étendant radialement depuis la paroi interne du bâti 3,4 vers le centre dudit bâti, sur 360°.

### Piston broyeur

Le piston broyeur 20 est une pièce rigide, de forme cylindrique. Il doit être robuste car c'est lui qui entre en contact avec la coque dure du fruit, et transmet l'effort nécessaire au cassage de la coque. En outre, il est susceptible d'être en contact avec la partie comestible du fruit, après le cassage de la coque. C'est pourquoi il est réalisé en métal dur, de préférence inoxydable et de qualité alimentaire, comme de l'acier inoxydable, ou sinon de l'acier chromé ou de l'acier électrozingué (ou acier carbone) avec un traitement de surface pour l'adapter au contexte alimentaire, par exemple. Il peut aussi être réalisé en aluminium, et vernissé. Il est fabriqué, de préférence, sous la forme d'une pièce d'un seul tenant, par exemple par fonderie ou par usinage d'un bloc de métal cylindrique.

La face avant 25 du piston broyeur 20 est corruguée. Par exemple, le motif des corrugations est un maillage bidimensionnel formant une matrice de pyramides trapézoïdales (*i.e.,* à pointe plate, du type de petites "dents de dragon"). Ces corrugations permettent d'éviter le glissement de la noix par rapport au piston 20 lors du cassage, et donc est favorable à l'efficacité du transfert d'énergie lors du cassage.

Le piston broyeur 20 est mobile longitudinalement, à l'interface entre le tunnel de guidage 31,41 de l'ensemble mobile 103 et le logement de fruit 32,42 et ce doublement car :
- il est mobile, pendant le pré-positionnement obtenu manuellement par l'utilisateur, avec l'ensemble mobile 103 dont il fait partie ; et, en outre,
- il est mobile par rapport au reste de l'ensemble mobile 103 pendant la phase de cassage assistée électriquement, c'est-à-dire durant l'activation du moteur électrique 16 dans le sens de rotation qui tend à faire avancer le piston, puis durant l'activation du moteur électrique dans le sens de rotation inverse afin de ramener le piston en retrait vers l'arrière, jusqu'à sa position de repos au plus près dudit moteur 16.

Plus particulièrement, durant la phase de pré-positionnement manuel et également pendant la phase de cassage assistée électriquement, et la pendant en outre la phase de retrait du piston broyeur 20, ledit piston est déplacé en translation le long de l'axe X à travers l'alésage de l'épaulement 43 formé dans le bâti 3,4, qui est de forme complémentaire à la section circulaire du piston 20.

La course longitudinale du piston broyeur 20 par rapport à l'ensemble mobile, est définie par le déplacement complet dudit piston 20 en translation suivant la direction longitudinale X, soit vers l'avant à partir de sa position extrême en arrière (position de repos) lorsque le moteur est commandé pour tourner dans un premier sens de rotation (par exemple le sens horaire) durant la phase de l'opération de casse qui est assistée électriquement, soit vers l'arrière à partir de sa position extrême en avant lorsque le moteur est commandé pour tourner dans le sens de rotation inverse (*i.e.,* le sens anti-horaire dans l'exemple) et ramener le piston 20 au plus près du moteur électrique 16 après le cassage de la coque.

Durant sa course longitudinale vers l'avant (ou course en avant) et durant sa course longitudinale vers l'arrière (ou course de retrait en arrière, ou encore course de retour), le piston broyeur 20 reste en contact glissant, par sa surface externe cylindrique, avec le bord interne de l'alésage circulaire formé par l'épaulement radial 43 entre le tunnel 31,41 de guidage de l'ensemble mobile, d'une part, et le logement de fruit 102 qui est formé par les évidements 32 et 42 dans les parties 3 et 4, respectivement, du bâti, d'autre part. Ainsi, durant sa course en avant et durant sa course de retour, le piston broyeur 20 est guidé en translation par l'épaulement radial 43. Et la correspondance de forme entre la section transversale du piston et celle de l'alésage formé par l'épaulement radial 43 prévient, ou du moins réduit très fortement le passage de débris de la coque ou de portions comestibles du fruit depuis le logement 102 vers le tunnel 31,41. Ainsi, de tels débris ne peuvent pénétrer et s'accumuler dans le premier mécanisme vis-écrou, en avant du moteur électrique 16.

Comme illustré à la Figure 15, l'engagement de la face avant 25 du piston broyeur 20 contre la coque du fruit à coque 200 dans le logement de fruit 32,42 permet de pousser ledit fruit 200 vers l'avant durant la phase de pré-positionnement manuel du piston, sous l'action de la seconde vis-sans-fin 5 en réponse à la rotation de la poignée 2 qui est fermement liée à l'écrou 8. La noix 200 finit par venir en butée contre la paroi avant du logement de fruit 102 (paroi non représentée à la Figure 15), par l'intermédiaire de levier de déclenchement 9 qui est agencé à l'avant du logement 102, comme montré à la Figure 15. Une déformation élastique du levier 9 cause un appui par une extrémité distale 91 du levier 9, contre le contact de l'interrupteur de déclenchement 191.

Dès lors, et en continuité, le déclenchement de la commande du moteur électrique permet de casser la coque du fruit 200. Ce résultat est obtenu grâce au couple de cassage fourni par le moteur électrique 16, sous l'action de la vis-sans-fin 30 qui tourne et fait avancer le piston broyeur 20, lequel réagit en effet en tant qu'écrou du premier système vis-écrou 30,20. Ainsi la progression vers l'avant du seul piston broyeur 20 (*i.e.,* indépendamment du reste de l'ensemble mobile 103) est continuée dès la fin de la phase de pré-positionnement qui coïncide avec le début de la phase de cassage proprement dite. Ce déplacement vers l'avant du piston broyeur 20 par rapport au reste de l'ensemble mobile 103 est réalisé avec l'assistance du moteur électrique 16, donc sans effort de la part de l'utilisateur. Cette poursuite de la progression vers l'avant du piston broyeur 20 est automatiquement commandée car l'alimentation électrique du moteur 16 est déclenchée dès que l'interrupteur de déclenchement 191 réagit à un contact franc du piston broyeur contre la noix 200, ce contact franc étant transmis audit interrupteur 191 par l'intermédiaire du levier 9.

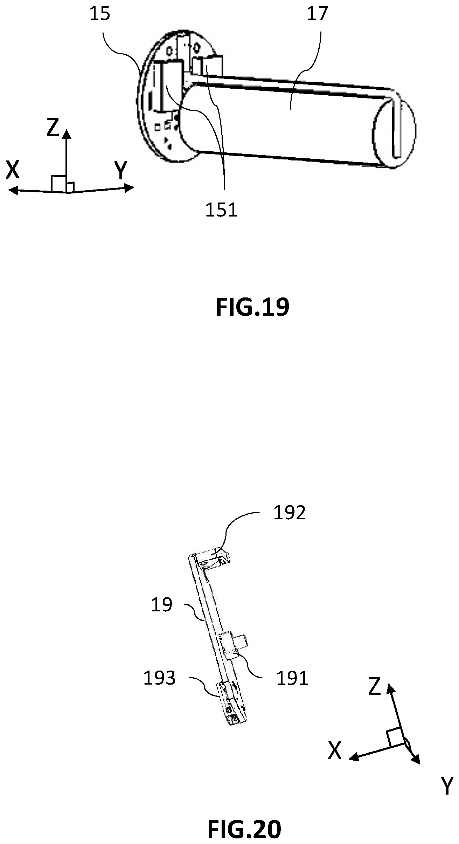

Une unité de commande électronique 151, montrée notamment à la Figure 16 et à la Figure 19, et qui est portée par le circuit imprimé 15, commande le moteur électrique, dans un sens de rotation ou dans le sens de rotation inverse. Elle est configurée pour piloter la course du piston vers l'avant, c'est-à-dire la distance axiale parcourue suivant la direction longitudinale X, en commandant le moteur pendant une durée fixe, en réponse à l'activation de l'interrupteur de déclenchement 191.

Dit autrement, la commande de la rotation du moteur électrique qui tend à faire avancer le piston broyeur par rapport au reste de l'ensemble mobile 103, est maintenue pendant une période de temps qui est fixe et constante. En référence à la théorie des systèmes asservis, on dit que le déplacement du piston est piloté en boucle ouverte, c'est-à-dire sans rétrocontrôle ("*feedback*" en anglais) comme un contrôle de position longitudinale qui serait fourni par un interrupteur de détection de fin de course (course vers l'avant), ou un dispositif de détection de l'élévation du couple fourni par le moteur sur la base du courant absorbé par le moteur lorsqu'il est commandé en rotation et que le piston est en contact franc avec la noix de sorte que le courant dans le moteur augmente.

La temporisation d'activation du moteur électrique 16 pour déplacer le piston 20 en translation vers l'avant est déterminée lors de la conception du casse-noix en fonction de la vitesse de rotation de l'arbre de sortie et du couple du moteur électrique utilisé, du pas de vis du filet 31 de la vis sans fin 30, et de la course longitudinale souhaitée qui découle de la connaissance *a priori* qu'a le concepteur de la résistance (*i.e.,* de la dureté) de la coque des fruits à coque à casser avec le casse-noix. Cette course souhaitée peut être comprise entre 4 mm et 6 mm, par exemple. De plus la temporisation est de l'ordre de 2 secondes (s), ce qui est une durée acceptable pour l'utilisateur afin d'obtenir le cassage d'une noix sans effort de sa part. Dans des modes de réalisation, le moteur électrique 16 est équipé d'un réducteur ("*gear*" en anglais) intégré, c'est-à-dire un constituant mécanique dont la fonction est de réduire la vitesse de rotation secondaire de l'arbre de sortie par rapport à la vitesse de rotation primaire du rotor du moteur. Le réducteur confère une vitesse faible de rotation de l'arbre de sortie 166 du moteur 16, de l'ordre d'un tour par minute (tr/min), par exemple de 65 tr/min (ou 65 RPM, de l'anglais "*Round per Minute*"). Ainsi, pour obtenir un déplacement longitudinal de 4 mm vers l'avant du piston broyeur pendant la temporisation de 2 s mentionnée ci-dessus, il convient de donner à la vis 30 un pas de vis de l'ordre de 2,00. Le pas de vis est la distance relative parcourue en translation par une vis par rapport à son support (ici l'écrou 20) lors d'un tour complet. Une vis 30 avec un pas de 2,00 se déplacera donc de 2 mm suivant l'axe de son hélicoïde lors d'une rotation d'un tour (pour un pas métrique), et donc d'environ 4 mm lors de la rotation à 65 tr/m (qui correspond à un peu plus de 1 tr/s) de l'arbre de sortie du moteur électrique 16 pendant une temporisation égale à 2 s.

La personne de métier appréciera que, grâce aux modes de réalisation de l'invention proposée, la temporisation précitée peut avantageusement être indépendante de la taille réelle, de la forme précise, et de l'orientation plus ou moins aléatoire du fruit à coque 200 spécifiquement présent dans le logement de fruit 102 et pincé entre le fond avant dudit logement et le piston broyeur 20.

Dans des modes de réalisation, l'unité de commande 151 est également configurée pour commander la rotation du moteur électrique 16 en sens inverse afin d'obtenir le retrait du piston 20 vers l'arrière. Dans des modes de réalisation, cette phase de retrait du piston est commandée dès la fin de la temporisation (*i.e.,* de la durée fixe) de la phase de cassage durant laquelle le piston broyeur 20 est déplacé en translation vers l'avant. Le retrait du piston 20 vers l'arrière libère les morceaux comestibles du fruit ainsi que les débris de la coque cassée. Ainsi, l'utilisateur peut immédiatement ouvrir la trappe 10 de fermeture du logement de fruits 102, et en faire sortir les morceaux de cerneaux de noix et en même temps évacuer dudit logement les débris de la coque, sans être gêné par la présence du piston broyeur 20 dans le logement de fruit 102.

En référence à la Figure 16, la face arrière du piston broyeur 20 comprend un alésage borgne 21, qui est taraudé. Le filet interne de cet alésage taraudé 21 (lui-même aussi référencé 21 dans ce qui suit, par commodité) est complémentaire du filet externe 31 de la vis-sans-fin 30. Le piston broyeur 20 forme un écrou coopérant avec la vis 30 dans un système vis-écrou dans lequel ladite vis 30 est l'élément meneur et ledit piston 20 est l'élément mené. La vis-sans-fin 30 est en permanence engagée par son filet extérieur 31 dans le filet intérieur de l'alésage taraudé 21, à l'arrière du piston broyeur 20. A cet effet, la longueur, considérée suivant la direction longitudinale X, des zones filetées du piston 20 et de la vis 30, est supérieure à la distance de la course longitudinale du piston broyeur 20 par rapport au reste de l'ensemble mobile 103.

La face arrière du piston broyeur 20 comprend au moins un, et préférentiellement deux évidements 22 d'extension longitudinale, prévu chacun pour la réception de l'une des tiges de blocage radial 161 et 162, respectivement. Les évidements 22 ont un profil en coupe transversale déterminé, par exemple de forme circulaire, qui correspond de préférence au profil en coupe transversale des tiges de blocage radial 161 et 162. Ces tiges sont solidaires de l'ensemble mobile 103. Par exemple, elles sont vissées dans et s'étendent longitudinalement depuis la face avant de la carcasse du moteur 16, de manière non-coaxiale avec l'arbre 166 du rotor dudit moteur 16 (*i.e.,* avec un décalage axial par rapport audit arbre 166). Les tiges 161 et 162, lorsqu'elles sont engagées dans les évidements 22 de section complémentaire du piston 20, empêchent la rotation du piston par rapport à la carcasse du moteur, c'est-à-dire aussi par rapport au reste de l'ensemble mobile 103. De préférence, elles sont alignées sur un même rayon et en symétrie l'une de l'autre par rapport à l'arbre 166 du rotor dudit moteur 16, pour équilibrer les efforts anti-rotation qu'elles exercent sur le piston broyeur 20. On évite ainsi une tendance à une mise en travers du piston broyeur 20 par rapport à l'axe longitudinal X. Bien entendu, les tiges anti-rotation 161 et 161 s'engagent dans les évidements 22 du piston 20 avec capacité de glissement longitudinal (*i.e.,* sans liaison axiale), et leur longueur suivant la direction longitudinale X ainsi que la profondeur des évidements 22 suivant ladite direction sont suffisantes pour permettre un coulissement du piston sur les tiges 161 et 162 lorsqu'il se déplace en translation par rapport à la carcasse du moteur 16.

Lorsque le moteur électrique 16 est alimenté par la batterie 17 sous la commande de l'unité de commande électronique 151, le rotor du moteur tourne. Etant donné qu'elle est fermement liée à l'arbre du moteur, la vis 30 tourne avec ledit arbre. Mais elle ne peut pas se déplacer longitudinalement. On dit qu'elle tourne "sans fin". Par contre, et du fait qu'il est bloqué en rotation par les tiges de blocage radial 161 et 162, le piston broyeur 20 est forcé de se déplacer en translation suivant la direction longitudinale X. Il constitue en effet l'écrou du système vis-écrou, qui est composé par les deux éléments 20 et 30 ainsi accouplés.

Durant la phase de cassage assisté électriquement, le moteur électrique tourne dans un sens qui, compte tenu du sens du filet de la vis 30, tend à faire avancer le piston. Cette phase dure le temps de la temporisation d'activation présentée plus haut. Durant la phase de retrait du piston 20 qui est commandée dès la fin de cette temporisation, le moteur électrique tourne dans le sens de rotation inverse sens. Le système vis-écrou étant un mécanisme symétrique du point de vue du sens de rotation, cette commande inverse du moteur tend à faire reculer le piston vers l'arrière du boîtier.

### Interrupteur de fin de course du piston-broyeur

La personne de métier appréciera que, bien que la temporisation de la commande du moteur électrique 16 qui tend à faire avancer le piston vers l'avant soit constante et soit déterminé en fonction de la course souhaitée du piston broyeur 20, la course en avant réelle dudit piston et relativement indéterminée. La position extrême avant qui est atteinte par le piston broyeur 20 dans le logement de fruits 102 à l'issue de la temporisation durant laquelle la commande du moteur électrique a été maintenue, dépend en effet de la résistance opposée par la coque du fruit à casser durant cette commande. Le mécanisme vis-écrou peut en effet avoir patiné avant que la rupture de la coque de noix ait été obtenue. Par conséquent, la course de retrait du piston broyeur 20 peut varier d'une opération à une autre.

Or, il est souhaitable de contrôler le retour du piston 20 vers sa position de repos au plus près de la face avant de la carcasse du moteur électrique 16. En effet, il est préférable de stopper la rotation du moteur dès que cette position de repos est atteinte, afin d'éviter d'endommager le mécanisme vis-écrou et tout élément à l'avant du moteur, ainsi que la face avant du moteur lui-même. En d'autres termes, bien que l'unité de commande électronique 151 puisse implémenter la commande inverse du moteur électrique pendant la même durée que la temporisation durant laquelle le moteur a été commandé de manière à faire avancer le piston broyeur, une telle implémentation n'est pas optimale.

C'est pourquoi, dans des modes de réalisation, un interrupteur de fin de course 131 est agencé sur la face avant du circuit imprimé 13, lequel est lié au corps (*i.e.,* à la carcasse) du moteur électrique 16, par exemple par vissage. L'interrupteur de fin de course 131 peut être un composant à montage en surface (CMS). Etant soudé en surface du circuit imprimé 13, il est donc lié à la face avant du corps du moteur électrique 16, soit directement contre la face avant du moteur 16, soit, comme dans l'exemple représenté, par l'intermédiaire de l'entretoise 14 qui est agencée contre ladite face avant du moteur 16.

L'interrupteur de fin de course 131 est fermé lors du retrait vers l'arrière du piston broyeur 20 depuis sa position extrême avant, pour commander l'arrêt de la rotation en sens inverse du moteur électrique afin de stopper le retrait du piston mobile 20 vers l'arrière lorsque ledit piston atteint sa position extrême arrière, ou position de repos. Dit autrement, la course vers l'arrière du piston broyeur 20 est commandée en boucle fermée, avec un rétrocontrôle en position assuré par l'interrupteur de fin de course 131.

La face arrière du piston broyeur 20 peut présenter un logement 24 pour recevoir un élément élastique configuré pour actionner un contact mobile de l'interrupteur de fin de course 131 afin de commander l'arrêt de la rotation en sens inverse du moteur électrique pour stopper le retrait du piston mobile 20 vers l'arrière. Cet élément peut être une pastille en matériaux caoutchouteux, comme une gomme élastique, ou une lamelle ressort come une lame en matériau métallique (par exemple en laiton ou en métal blanc) pliée, qui assure la même fonction d'amortissement qu'un ressort hélicoïdal. Ce ressort (non représenté) amortit la force d'appui du piston 20 sur le contact de l'interrupteur de fin de course 131 lors du retrait du piston vers l'arrière. On protège ainsi l'interrupteur de fin de course 131 d'un endommagement qui pourrait résulter d'un effet de martèlement lors de l'impact du bord arrière du piston 20 contre le contact de l'interrupteur. D'une façon générale, la commande du casse-noix est avantageusement conçue pour éviter les à-coups. Ceci est favorable à la longévité opérationnelle des éléments du casse-noix. Ceci procure également une utilisation agréable pour l'utilisateur, avec un ressenti tactile très doux et sans bruit de fonctionnement excessif.

### Moteur électrique

Le moteur électrique 16 est choisi en fonction de différents paramètres, mécaniques et/ou électriques.

En particulier, le modèle du moteur 16 doit être sélectionné sur la base de ses dimensions externes, qui définissent son encombrement longitudinal et son encombrement transversal. Plus particulièrement, le diamètre du corps du moteur (*i.e.,* de sa carcasse externe) doit être adapté à la section du tunnel de guidage 32,42 prévu dans le bâti interne 3,4 du boîtier 101 du casse-noix. De même, la longueur axiale de sa carcasse externe et celle de son arbre suivant l'axe longitudinal, sont des paramètres à prendre en compte.

Du point de vue électrique, le moteur électrique 16 être un moteur alimenté sous une faible tension, par exemple de 3,7 volts (V), choisie pour être compatible avec la tension délivrée par la batterie électrique 17. Également, il est choisi parmi les moteurs électrique disponibles auprès de fournisseurs, qui sont aptes à délivrer un couple (*i.e.,* une force) qui est adapté(e) aux types de fruits à coque à casser dans l'application envisagée.

Dans des modes de réalisation le moteur électrique 16 peut ainsi être adapté pour fournir un couple C compris entre 200 Newton (N) pour casser la coque des noisettes et des noix, et 380 N pour casser la coque de noix du Brésil qui est plus dure que celle des noisettes et des noix. Le cas échéant, on peut choisir un moteur délivrant un couple C encore supérieur, par exemple un couple de 440 N pour avoir un casse-noix capable de casser la coque des amandes et des noix de cajou, qui ont une coque encore plus dure. Il est possible de proposer plusieurs versions du casse-noix équipées de moteurs électriques ayant des couples respectifs différents, adaptés pour le cassage de la coque de fruits à coque différents, en procurant ainsi un effet de gamme.

Par exemple, on peut choisir un moteur électrique à réducteur planétaire intégré, donnant une faible vitesse de rotation de l'arbre de sortie (par exemple 65 tours/minute) fortement réduite par rapport à la vitesse de rotation primaire du rotor, et un couple élevé, d'au moins 200 N.

### Batterie électrique

De la même manière, la batterie électrique 17 est choisie en fonction de ses caractéristiques d'encombrement définies par ses dimensions externes, et en fonction en outre de paramètres électriques. C'est une batterie rechargeable, qui confère au casse-noix la nature d'un dispositif portatif et sans fils, qui peut être utilisée de façon nomade, c'est-à-dire qu'il peut accompagner l'utilisateur lors de ses déplacements au sein de sa maison ou de son appartement de résidence (par exemple de la cuisine à la salle à manger ou à la terrasse extérieure), mais également lors de ses séjours dans ses différents lieux de résidence (par exemple dans sa résidence principale et dans une résidence secondaire lorsque l'utilisateur s'y déplace).

On rappelle que, dans les modes de réalisations proposés, la batterie 17 fait partie de l'ensemble mobile 103 et est avantageusement logée à l'intérieur de la vis 5 de l'ensemble vis-écrou du second système vis-écrou 5,8. Ceci est une solution très avantageuse en termes d'encombrement, qui permet de limiter la longueur totale du boîtier 101 du casse-noix. C'est pourquoi, de préférence, le corps de la batterie a la forme d'un cylindre dont la section transversale circulaire a un diamètre compatible avec le diamètre interne de la vis 5 dans laquelle elle est logée. Toutefois, rien n'empêche de prévoir une batterie ayant un corps de forme différente, par exemple une forme parallélépipédique, du moment que ses dimensions sont compatibles avec les contraintes d'assemblage dans le boîtier 101, et de préférence dans la vis 5.

Du point de vue électrique, la batterie 16 est une batterie rechargeable, et peut avantageusement être une batterie lithium-ion ("Li-ion"), dont l'avantage réside dans une haute densité d'énergie, c'est-à-dire qu'elle peut stocker 3 à 4 fois plus d'énergie par unité de masse que les autres technologies de batteries. Pour une capacité de stockage d'énergie donnée, une batterie li ion est donc particulièrement légère, ce qui est un atout pour un dispositif portatif comme le casse-noix proposé. En outre, elle se recharge très vite, et offre une grande longévité puisqu'elle supporte de nombreux cycles de charges-décharges à 100 % (au minimum 500 à 600 cycles, et dans certains cas jusqu'à 3000 cycles). Ces batteries sont nativement équipées de dispositif de protection, contre la surchauffe notamment, pour éviter tout risque d'explosion.

Par exemple, la batterie 17 est une batterie standard du marché comprenant une cellule Li-ion de format 18650, avec une tension nominale 3,6 ou 3,7 V (qui est la tension nominale d'un élément d'accumulation en technologie Lithium-ion). La tension minimale de fonctionnement est de 2,5 V, et la tension de charge maximale (tension terminale, en fin de recharge) atteint généralement 4,2 V. Une telle cellule est cylindrique et fait 18 mm de diamètre et 65 mm de longueur. Elle pèse environ 50 grammes (g). Elle peut avoir une capacité, qui indique l'autonomie de la batterie, comprise entre 2000 milliampères/heure (mAh) et 3600 mAh, selon les modèles. Elle peut supporter des courants de décharge allant de 5 Ampères (A) à 30 A, ce qui est compatible avec l'application envisagée.

Si besoin, par exemple pour un casse-noix équipé d'un moteur électrique fournissant un couple de 440 N capable de casser la coque, plus dure, des amandes et des noix de cajou, la batterie 17 peut comprendre une cellule de format 21700. Par comparaison avec l'exemple précédent, cette cellule fait 21 mm de diamètre et 70 mm de long. En contrepartie de ces dimensions plus élevées, elle peut accepter des courants de décharge jusqu'à 45 A et des capacités jusqu'à 5000 mAh. C'est pourquoi ces cellules sont utilisées, notamment dans la plupart des batteries d'outils de bricolage électroportatifs par exemple, et voient leur prix diminuer du fait de leur diffusion croissante.

La personne de métier appréciera que l'invention n'entend pas être limitée par le type de technologie de la batterie électrique. Bien que les batteries lithium-ion soient actuellement très populaires en raison de leurs nombreux avantages mentionnés dans ce qui précède, d'autres technologies de batterie rechargeable existent et peuvent également être considérées, comme l'utilisation de cellules à hydrure métallique de nickel (NiMh) ou de cellules au nickel-cadmium (NiCd), par exemple.

Dans des modes de réalisation, la batterie 17 est soudée à l'arrière du moteur 16, au travers ou par l'intermédiaire du circuit imprimé arrière 15. On rappelle que ce circuit imprimé 15 supporte l'essentiel de l'électronique de commande du casse-noix, comprenant l'électronique de gestion du moteur 16 et l'électronique de gestion de la batterie 17. Dans la présente description cette électronique est aussi désignée, en termes fonctionnels, comme l'unité de commande électronique 151 du casse-noix. Par exemple, la batterie 17 est soudée sur la face arrière du circuit imprimé 15, dont la face avant est elle-même soudée sur des broches à l'arrière du moteur 16. Ces soudures assurent à la fois un raccordement électrique et, en outre, une liaison mécanique entre la batterie 17 et le moteur 16 au sein de l'ensemble mobile 103.

Comme il a été exposé plus haut dans la section relative à l'enveloppe externe du casse-noix 100, la prise de recharge 193 prévue pour la recharge de la batterie 17 est installée à l'avant du boîtier 101 du casse-noix. Elle est par exemple une prise USB-C qui se présente sous la forme d'un composant à montage en surface, soudé au circuit imprimé avant 19, lequel est fixe par rapport au bâti 3,4 (il n'appartient pas à l'ensemble mobile). Des fils électriques (non représentés), ou une nappe électrique relient le circuit imprimé avant 19 au circuit imprimé arrière 15. Ces fils ou cette nappe sont assez longs et souples pour accompagner la course de l'ensemble mobile 103 par rapport au bâti 3,4. Ces conducteurs électriques souples peuvent par exemple passer dans des espaces formés entre le bâti 3,4 et la partie avant 1 du boîtier 101 qui enveloppe le bâti, par exemple les espaces formés en-dessous des arrêtes longitudinales 111 de ladite partie avant 1 du boîtier 101, comme déjà mentionné plus haut.

### Système vis-écrou électrique de cassage

Dans le casse-noix selon des modes de réalisation de l'invention, le premier système de conversion vis-écrou est configuré comme un vérin électrique. Ce vérin est configuré pour pousser et pour tirer une charge constituée par le piston broyeur 20, suivant la direction longitudinale X vers l'avant ou vers l'arrière, respectivement, et ce en fonction du sens de rotation du moteur 16 qui entraîne la vis 30 en rotation. Un vérin électrique est un actionneur électrique ayant l'avantage d'être compact et programmable. Cet actionneur convertit la rotation d'un moteur (énergie électrique), en un mouvement linéaire (énergie mécanique) d'un élément entraîné. Il offre une force, une précision et une vitesse élevée avec une accélération et une décélération contrôlée qui évite les à-coups de fonctionnement.

Dans l'application au casse-noix selon les modes de réalisations proposés, et en référence à la Figure 16, le mouvement linéaire du piston 20 en tant qu'élément mené, est créé par la combinaison de la rotation de la vis sans fin 30 en tant qu'élément meneur, d'une part, et du blocage anti-rotation (obtenu par les tiges 161 et 162) du piston broyeur 20 en tant qu'élément mené, d'autre part. La rotation de la vis sans fin 30 est produite par celle de l'arbre 166 du moteur 16, dont la vis 30 est solidaire.

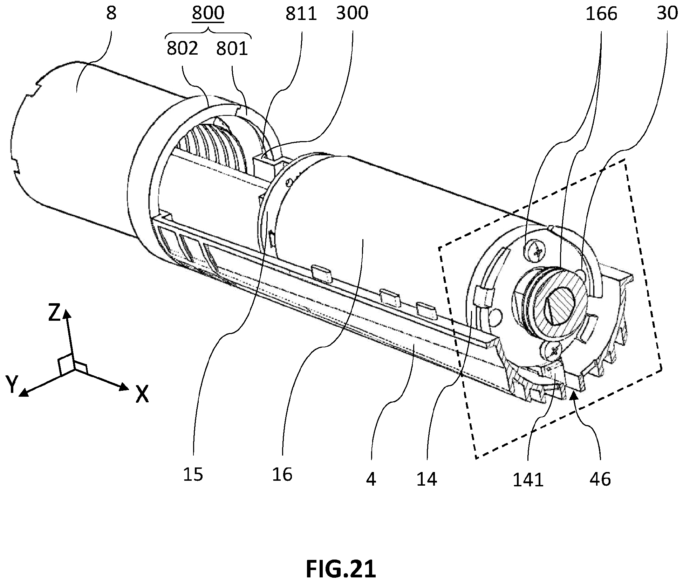

La vis sans fin 30 est guidée (ou plutôt entraînée) en rotation en étant fermement liée à l'extrémité avant de l'arbre 166 du moteur 16 par un accouplement mécanique comprenant un méplat 32 formé dans un alésage longitudinal à l'arrière de la vis 30 (voir Figure 16). Comme montré à la Figure 21, sur laquelle la vis 30 et l'arbre 166 du moteur électrique 16 apparaissent (en partie droite de la figure) dans un plan de coupe transversal, cet alésage de la vis 30 s'engage par coopération de forme sur l'arbre 166 du moteur qui comporte un méplat correspondant. Une vis de blocage (ou vis pointeau, non représentée) peut compléter cet accouplement, en venant appuyer sur le méplat de l'arbre 166, à travers un trou taraudé s'étendant radialement à l'arrière de la vis 30 (et plus particulièrement en arrière du filet 31 de ladite vis). Ce trou taraudé est visible sur la Figure 16 mais non référencé pour ne pas surcharger la figure.

Le piston broyeur 20 est bloqué en rotation par les tiges anti-rotation 161 et 162 qui sont engagées, avec capacité de coulissement longitudinal, dans les trous borgnes 21 et 22, respectivement, à l'arrière dudit piston 20.

Moyennant quoi, lorsque le moteur 16 entraîne la vis sans fin 30 en rotation, soit dans le sens horaire soit dans le sens anti-horaire, ce mécanisme déplace le piston broyeur 20 en translation dans un sens ou dans l'autre le long de l'axe hélicoïdal du filet 31 de la vis 5 et du filet 21 correspondant du piston 20, qui est aussi l'axe longitudinal X du tunnel de guidage 32,42 dans le bâti 3,4. On obtient ainsi un effet de poussée vers l'avant, ou un effet de traction vers l'arrière, du piston broyeur 20.

Le guidage en translation du piston 20 est assuré par contact glissant du corps externe du piston 20 contre l'épaulement annulaire 43 formé sur la paroi interne du bâti 3,4 Cet épaulement s'étend sur 360°, et assure une fonction d'anneau de guidage. On peut également considérer l'anneau de guidage 43 comme étant une paroi transversale de séparation entre le tunnel 31,41 et le logement de fruit 32,42 qui a un alésage central suivant l'axe longitudinal X dont le diamètre correspond sensiblement au diamètre externe du piston broyeur 20. La translation du piston suivant la direction longitudinale X (vers l'avant lors du cassage assisté électriquement, et vers l'arrière lors du retrait du piston broyeur 20) est guidée par le bord interne de cet alésage d'axe longitudinal

Le mécanisme vis-écrou décrit ci-dessus convertit l'énergie de rotation en entrée, caractérisée par une vitesse angulaire ω et un couple C, en une énergie de translation en sortie, caractérisée par une vitesse linéaire V et une force F. Dit autrement, dans le contexte des modes de réalisation, ce mécanisme convertit le couple de rotation C du moteur 16 et une force de poussée F du piston broyeur 20 vers l'avant, qui produit le cassage de la coque de la noix 200 montrée à la Figure 15. La course longitudinale du piston 20, c'est-à-dire le déplacement (en mm) suivant la direction longitudinale X est donnée par le rapport de transformation, et est d'une valeur du pas P de vis de la vis (en mm) pour un tour (angle 2π) de l'arbre tournant 166 du moteur 16. Les paramètres de la relation entre l'énergie de rotation en entrée et l'énergie de translation en sortie sont la géométrie de la vis 30 (le pas de vis P, et le profil du filet) et le rendement η du mécanisme. Le rendement η dépend du coefficient de frottement entre le filet extérieur (filet 31) de la vis 30 et le filet intérieur (filet 21) de l'écrou formé par le piston broyeur 20. En effet, suivant le principe physique de la conservation de l'énergie qui s'applique à cette conversion, la puissance en entrée est égale à la puissance en sortie, au rendement η près, selon la relation suivante :
$C . ω = \frac{F . V}{η}$

Il s'ensuit que, si le piston broyeur 20 du casse noix, qui est actionné en sortie du système, demande une force F déterminée qui est nécessaire au cassage d'une coque de noix, alors le moteur électrique 16 doit fournir un couple C en entrée qui est défini par la relation :
$C = \frac{F . P}{2 π . η}$

Dans des modes de réalisations il a été déterminé par l'expérimentation qu'un couple du moteur qui est compris entre 200 N et 300 N est largement suffisant pour casser la coque de noix communes (des variétés "Franquette", "Mayette" ou "Parisienne rustique", par exemple, qui sont très répandues en France) ou de noisettes.

### Système vis-écrou mécanique de pré-positionnement

Le pré-positionnement du piston-broyeur 20, qui est préalable à l'activation du moteur électrique 16 et qui se termine par le déclenchement de cette activation lorsqu'un contact franc est établi entre ledit piston 20 et la noix à casser 200, est assuré par un second système vis-écrou, qui comprend une vis 5 et un écrou 8. Dans des modes de réalisation du casse-noix, ce second système vis-écrou 5,8 est coaxial avec le premier système vis-écrou 30,20 qui est formé par la vis 30 et le piston-broyeur 20 et qui a été décrit plus haut. Dit autrement, la vis 5 est coaxiale avec la vis sans fin 30. Dans des modes de réalisation, leurs axes longitudinaux respectifs coïncident en outre avec l'axe longitudinal X du boîtier

A l'inverse du premier système vis-écrou 30,20 en revanche, dans le second système vis-écrou 5,8 c'est l'écrou 8 qui est l'organe meneur, la vis 5 étant l'organe mené : le mouvement de rotation de l'écrou 8 qui est imprimé via la poignée rotative 2 à laquelle il est lié sans glissement, est transformé en un mouvement de translation de la vis 5 suivant la direction longitudinale X du boîtier 101.

En outre, alors que le premier système vis-écrou 30,20 est utilisé dans un système électrique, à savoir le vérin électrique produisant l'énergie nécessaire au cassage de la coque de noix, le second système vis-écrou 5,8 est quant à lui purement mécanique, et manuel. Le mouvement de rotation de l'écrou 8 est exercé par l'intermédiaire de la poignée rotative 2 à laquelle il est fermement lié. La direction du mouvement de translation de la vis 5 suivant la direction longitudinale X du boîtier 101, vers l'avant ou vers l'arrière, dépend du sens de la rotation de la poignée 2 qui est imprimé manuellement par l'utilisateur par rapport à la partie avant 1 dudit boîtier. Comme la vis 5 appartient à l'ensemble mobile 103 et lui est fermement liée, ces manipulations de la poignée rotative 2 par l'utilisateur font alors avancer ou reculer, respectivement, ledit ensemble 103 dans le boîtier 101.

La rotation de la vis provient de la poigne de l'utilisateur, mais sans effort significatif de sa part. En effet, l'énergie dépensée et la force appliquée par l'utilisateur sont seulement l'énergie et la force nécessaires pour vaincre les frottements du mécanisme. Lorsqu'un contact s'établit entre la face avant 23 du piston broyeur 20 et la noix 200 à casser, ce contact n'est pas immédiatement un contact franc. En effet, la noix est d'abord poussée vers l'avant par l'avancée du piston broyeur 20 en même temps et dans la même mesure que le reste de l'ensemble mobile 103, sans offrir de résistance à cette avancée. Ce n'est que lorsque la noix 200 atteint la paroi avant du logement de fruit 102 et vient en appui contre le levier de déclenchement 9 qui est agencé à l'avant dudit logement, qu'un contact est franc est établi entre le piston broyeur 20 et la noix 200 qui vient en butée avant, contre le levier 9, comme illustré par la Figure 15. Et comme le levier 9 est configuré pour activer l'interrupteur de déclenchement 191 en réponse à cet appui franc du piston broyeur 20 sur la coque d'un fruit à coque bloqué entre le piston broyeur 20 et la paroi avant du logement de fruit 102, l'activation du moteur électrique 16 est immédiatement déclenchée.

Dès lors, et sans même que l'utilisateur s'en rende forcément compte et sans qu'il doive à aucun moment produire un effort supplémentaire, le piston est entraîné plus en avant, également par rapport au reste de l'ensemble mobile, par l'effet de vérin et la rotation du moteur électrique. L'énergie mécanique et la force qui sont nécessaires pour vaincre la résistance de la coque de la noix et la casser, sont fournie par le l'énergie électrique emmagasinée dans la batterie électrique 17 et par le couple du moteur électrique 16. En pratique, l'utilisateur est alerté du cassage de la noix par le bruit habituel causé par la fracture de la coque de la noix.

En référence à la Figure 8, à la Figure 13 et à la Figure 21, le guidage en rotation de l'écrou 8 est assuré par une gorge annulaire 811 prévue sur la face interne d'une collerette 800 qui est formée à l'avant de l'écrou 8, en coopération avec une nervure annulaire 300 prévue à l'extérieur et à l'arrière du bâti 3,4. Cette coopération assure également le blocage en translation de l'écrou 8 par rapport au bâti 3,4.

Dans des modes de réalisation avantageux, et comme montré à la Figure 21, le guidage en translation de la vis 5 suivant la direction longitudinale X, et en réalité celui de tout l'ensemble mobile 103 dont la vis 5 est fermement solidaire, est assuré par un doigt de guidage 141 en coopération avec une fente de guidage 46 prévue à cette fin dans le bâti 3,4. En référence en outre à la Figure 11 et à la Figure 16, le doigt de guidage 141 s'étend radialement vers l'extérieur depuis le bas de l'entretoise annulaire 14 qui est fixée sur la face avant du moteur électrique 16. Le doigt de guidage 141 coopère avec une fente de guidage 46, d'extension longitudinale, qui est prévue dans la partie inférieure 4 du bâti 3,4 et dans laquelle ledit doigt de guidage 141 est amené à glisser lorsque l'ensemble mobile 103 est déplacé en translation longitudinale vers l'avant. Comme on l'aura compris, le doigt radial 141 et la fente longitudinale 46 assurent le blocage en rotation de la vis 5, laquelle est liée au reste de l'ensemble mobile 103 et donc en particulier à l'entretoise 14 et à son doigt radial 141.

La personne de métier appréciera que la position angulaire du doigt de guidage 141 en périphérie de l'entretoise 14 peut différer de la position en bas considérée dans le mode de réalisation décrit ici : en variante en effet, elle peut aussi bien être en haut ou en toute autre position angulaire entre le haut et le bas de l'entretoise 14, d'un côté ou de l'autre suivant la direction transversale Y. Également, il est possible de prévoir plus d'un doigt de guidage, par exemple deux doigts de guidage, notamment deux doigts de guidage diamétralement opposés avec par exemple un doigt de guidage en haut et un autre en bas, ou plusieurs paires de doigts de guidage diamétralement opposés.

On rappelle que la vis 5 est également adaptée, à titre secondaire, pour loger la batterie 17 qui fait également partie de l'ensemble mobile, comme montré à la Figure 16. Sa fonction est donc double. D'une part elle constitue la vis du second système vis-écrou pour le préréglage manuel du casse-noix, *i.e.,* pour le pré-positionnement du piston broyeur 20 avant le déclenchement de la commande du moteur électrique 16. A cet effet elle coopère avec la poignée 2, de sorte que lorsque ladite poignée 2 est tournée par l'utilisateur, par exemple dans le sens du vissage (sens horaire), la vis se déplace longitudinalement dans le bâti interne 3,4 vers l'avant. Et d'autre part elle permet de loger la batterie électrique 17.

A cet effet, et comme il apparaît à la Figure 11, à la Figure 13 et à la Figure 16, la vis 5 est formée de deux demi-tubes creux 51 et 52 séparés suivant un plan qui est parallèle à l'axe longitudinal X, et qui sont assemblés l'un à l'autre suivant une direction radiale, par exemple par emboîtement. Dans des modes de réalisation, les deux demi-tubes creux 51 et 52 sont maintenus solidaires entre eux, en variante ou en complément, par un capuchon arrière 53 qui vient s'encliqueter, par coopération de forme, sur le fond arrière de la vis 5. La personne de métier appréciera que le maintien par ce simple capuchon est suffisant, au stade de l'assemblage, étant donné que l'écrou 8 dont le filet interne 80 (voir plus bas) correspond au filet externe 50 de la vis 5, est ensuite installé sur la vis par vissage depuis l'arrière de ladite vis. En effet, l'écrou 8 empêche alors toute séparation des deux demi-tubes 51 et 52 qui forment la vis 5. Bien entendu, la batterie électrique 17 est disposée entre les deux demi-tubes 51 et 52 avant leur assemblage mutuel, et avant l'installation de la vis 5 dans l'écrou 8.

La face externe des demi-tubes creux 51 et 52 présente le filet externe 50 de la vis 5, qui correspond au filet interne de l'écrou 8. Les demi-tubes creux 51 et 52 sont par exemple réalisés en matériau plastique dur. Ils peuvent être fabriqués par injection de plastique moulé, par fabrication additive, ou par tout autre moyen équivalent.

En résumé, la vis 5 fait partie de l'ensemble mobile 103 et sa fonction principale est d'entraîner ledit ensemble 103 en translation suivant la direction longitudinale X du boîtier 102, en réponse à la rotation de l'écrou 8 qui est obtenue une action manuelle de l'utilisateur par l'intermédiaire de la poignée rotative 2 dont l'écrou 8 est solidaire. Mais à titre secondaire, la vis 5 sert également de logement pour la batterie, ce qui réduit l'encombrement du casse-noix suivant la direction longitudinale de l'axe X.

En référence maintenant à la Figure 12 et à la Figure 13, l'écrou 8 a la forme générale d'un manchon borgne, ouvert sur l'avant, doté d'un filet interne 80 adapté pour coopérer avec le filet externe 50 de la vis 5. Il est formé de deux parties ou demi-écrous séparés suivant un plan qui est parallèle à l'axe longitudinal X, à savoir une partie 81 et une partie 82 qui sont assemblées l'une avec l'autre suivant une direction radiale. Sur la Figure 12, seule la partie 81 est représentée, afin de montrer le filet interne 80, et sa coopération avec le filet externe 50 de la vis 5.

Dans des modes de réalisation, l'écrou 8 comprend en outre une bague de maintien 83, qui enserre les deux demi-écrous 81 et 52, et qui s'emmanche d'arrière en avant, par-dessus lesdits demi-écrous. La bague de maintien 83 est par exemple en aluminium. Elle est formée d'un simple tronçon de tube, qui peut être de diamètre standard, ce qui lui confère l'avantage d'être bon marché. Son diamètre interne correspond sensiblement au diamètre externe de l'écrou 8, ce qui lui permet d'assurer le maintien solidaire des deux parties 81 et 82 de l'écrou l'une contre l'autre. La bague 83 est mise en place en recouvrement du fût que forme le corps de cet écrou 8 après rapprochement suivant une direction radiale des deux parties 81 et 82. Cette mise en place est effectuée par coulissement depuis l'extrémité arrière de l'écrou 8, une fois que les deux demi-écrous 81 et 82 ont été mis en correspondance et plaqués l'un contre l'autre suivant la direction radiale. Ainsi, la fonction de le bague 83 est d'assurer le maintien des deux demi-écrous 81 et 52 ensembles, et donc la rigidité de l'écrou 8.

A l'avant, l'écrou 8 comprend un collet 800 (formé de deux portions de collet 801 et 802 venant chacun de matière avec l'une des deux parties d'écrou 81 et 82, respectivement. Ce collet possède une rainure annulaire interne 810 visible à La Figure 13 (de deux portions de rainure formée chacune sur l'une des parties d'écrou 81 et 82, respectivement. Comme montré, à la Figure 21, la rainure annulaire interne 810 du collet 800 de l'écrou 8 est adaptée pour coopérer avec une languette annulaire externe 300 correspondante, qui est formée à l'extrémité arrière du bâti 3,4, pour le guidage en rotation de l'écrou 8. La rainure annulaire 810 et la languette annulaire 300 assurent mutuellement le guidage en rotation de l'écrou 8.

La poignée 2 (qui forme partie arrière de l'enveloppe externe 101 du casse-noix) est mise en place sur l'écrou 8, par exemple par emmanchement à force depuis l'arrière vers l'avant. A cet effet, Le manche 2 peut avantageusement comprendre des nervures 201 d'extension longitudinale, montrées sur la Figure 14 sur laquelle le manche 2 est représenté vu de l'avant. Ces nervures 201 sont par exemple effilées vers l'avant, et sont angulairement réparties le long de la périphérie interne à l'arrière dudit manche 2. Elles sont ainsi configurées pour s'engager à force sur la face externe de l'écrou 8, en arrière de la bague 83 de l'écrou 8 (voir Figure 12). La poignée 2 est ainsi solidement engagée avec la paroi externe de l'écrou 8, avec un serrage obtenu grâce aux nervures effilées 801 dont les pointes sont dirigées vers l'avant et dont les bases plus larges sont à l'arrière. Ainsi quand, lors de l'utilisation du casse-noix, l'utilisateur tourne la poignée 2 à la main, l'écrou 8 tourne également, sans glissement de la poignée par rapport à l'écrou.

Une zone annulaire 202 à l'avant de la paroi interne du manche 2, qui est directement en avant des nervures longitudinales effilées 201 et qui a un diamètre interne légèrement plus grand que la zone arrière sur laquelle lesdites nervures 201 sont formées, peut venir en recouvrement de l'arrière de la bague de maintien 83 de l'écrou 8. Le diamètre interne de la zone annulaire 202 correspond à cet effet sensiblement au diamètre externe de la bague 83. Ceci renforce encore la rigidité de l'écrou 8.

### Commande électronique

Dans des modes de réalisation, l'unité de commande est programmée pour piloter en boucle ouverte le déplacement du piston broyeur 20 vers l'avant, en causant l'arrêt de la commande vers l'avant au terme d'une temporisation déterminée. Cette stratégie de commande en boucle ouverte est particulièrement simple, par rapport à une commande en boucle fermée. En variante, différentes stratégies de commande en boucle fermée pourraient être envisagées, comme un arrêt après dépassement vers l'avant par la tête mobile d'une position limite déterminée, ou un arrêt sur détection d'une baisse brutale du couple du moteur (par détection d'une chute de courant d'induction, par exemple), ou encore un arrêt sur détection par un microphone d'un bruit associé à la rupture de la coque de la noix.

Dans des modes de réalisation, la temporisation est choisie en fonction des paramètres de conception mécanique et des caractéristiques électriques des différents éléments constitutifs du casse-noix, et également en fonction d'une plage de valeurs estimées des efforts à fournir (couple, puissance) pour casser la coque des fruits considérés. Plus particulièrement, on veillera à ce que la course vers l'avant de la tête mobile durant la durée de la temporisation ne dépasse pas la longueur axiale de la cavité, afin d'empêcher que la tête ne heurte la paroi avant de ladite cavité avec le risque de l'endommager ou d'endommager des éléments qui s'y trouvent. En réalité, la temporisation sera de préférence choisie afin que cette course ne représente au maximum qu'une partie de la longueur axiale de la cavité, par exemple comprise entre 10% et 30% de ladite longueur axiale, afin d'éviter de broyer la partie comestible du fruit après rupture de la coque.

L'unité de commande peut être configurée pour, dès l'achèvement de la temporisation de la commande du vérin électrique vers l'avant, commander un déplacement dudit vérin vers l'arrière. Cette dernière commande tend à ramener le piston broyeur 20 en arrière, jusqu'à sa position de repos qui est la position la plus en arrière, afin de libérer le logement de fruit 102 et permettre à l'utilisateur de le vider, notamment pour obtenir les cerneaux de noix en les séparant des débris de la coque de la noix. Comme il a déjà été exposé, cette commande de retrait du piston broyeur 20 est de préférence une commande en boucle fermée, étant donné l'incertitude sur la position maximale avant précisément atteinte par le piston à l'issue de la temporisation de la commande du moteur électrique 16 dans le sens tendant à faire avancer ledit piston. Par exemple, l'arrêt de la commande du moteur électrique tendant à faire reculer le piston 20 vers l'arrière peut être causé par l'activation du capteur 131 de fin de course arrière du piston broyeur 20, qui a été présenté en détail plus haut.

L'unité de commande électronique 151 peut être implémentée sous la forme d'un microcontrôleur (ou MCU, de l'anglais "*Micro-controller Unit*") piloté par un programme embarqué, agencé sur le circuit imprimé arrière 15. Il peut s'agir par exemple d'un microcontrôleur de la série ATtiny, par exemple celui disponible auprès de la société Atmel^{®} sous la référence ATtiny85/V. Ce microcontrôleur intègre un processeur avec une architecture AVR^{®} à 8 bits opérant à une fréquence de 20 MHz (mégahertz), et une mémoire embarquée non volatile comprenant une mémoire de type Flash avec 8 Ko (kilo-octets) de capacité pour le stockage du programme de pilotage, ainsi qu'une mémoire de type EEPROM de 512 octets et une mémoire de type SRAM de 512 octets. Il intègre un convertisseur analogique-numérique (CAN) à une résolution de 10 bits à quatre canaux simples et deux paires de canaux différentiels avec un gain programmable entre 1x et 20x. Il est fourni en boîtier compact à 8 broches (de type SOIC-8) avec six entrées/sorties (I/O, mis pour "*Input*/*Output*" en anglais) programmables, et fonctionne sous une tension d'alimentation comprise entre 2,7 V et 5,5 V.

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en œuvre par la personne du métier à la lecture de la présente description et des dessins annexés.

Dans les revendications, le terme "comprendre" ou "comporter" n'exclut pas d'autres éléments ou d'autres étapes. Un seul processeur ou plusieurs autres unités peuvent être utilisées pour mettre en œuvre l'invention. Les différentes caractéristiques présentées et/ou revendiquées peuvent être avantageusement combinées. Leur présence dans la description ou dans des revendications dépendantes différentes, n'excluent pas cette possibilité. Les signes de référence ne sauraient être compris comme limitant la portée de l'invention.

### Liste des documents cités

### Documents brevets

DE-202012001237-U1
GB-2368514-A1
CN-201220368491-U1
DE-202010004043-U1
CN-201958686-U1
CN-208541201-U1

### Littérature non-brevet

Néant

## Revendications

1. Dispositif (100) à main pour casser par pression la coque d'un fruit à coque dure (200) avec une assistance électrique, ledit dispositif comportant :
• un boîtier (101) allongé, s'étendant suivant une direction longitudinale (X) déterminée ;
• un logement de fruit (102), agencé à l'avant du boîtier (101), pour recevoir le fruit à coque dure (200) à casser ; et,
• un piston broyeur (20), entraîné en translation dans le boîtier suivant la direction longitudinale (X) dudit boîtier par un vérin électrique (13,14,30,15,16,17) comprenant une première vis-sans-fin (30) et un moteur électrique (16) d'entraînement en rotation de ladite vis-sans-fin, qui est alimenté par une batterie d'alimentation électrique (17),
**caractérisé en ce qu'**il comprend en outre :
• un bâti (3,4), interne au boîtier (101) ;
• une enveloppe externe du boîtier (101), en au moins deux parties (1,2) coaxiales enfermant le bâti (3,4), avec une partie avant (1) solidaire du bâti (3,4), d'une part, et une partie arrière (2) formant une poignée rotative qui peut être manœuvrée, en rotation seulement, par rapport audit bâti (3,4), d'autre part ;
• un ensemble mobile (103), pouvant se déplacer par rapport au bâti en translation dans le boîtier (101) suivant la direction longitudinale (X) dudit boîtier, et comprenant :
• le piston broyeur (20),
• le vérin électrique (30,16,17) d'entraînement en translation du piston broyeur (20) avec
• la première vis-sans-fin (30),
• le moteur électrique (16) d'entraînement en rotation, et
• la batterie (17) d'alimentation électrique, et
• une seconde vis-sans-fin (5) configurée pour, en coopération avec la poignée rotative (2), déplacer l'ensemble mobile en translation dans le boîtier (101), en réponse à une manœuvre en rotation de la poignée rotative (2) ; ainsi que,
• un interrupteur de déclenchement (191) agencé au niveau d'une paroi avant (103) du logement de fruit (102), et configuré pour déclencher la commande du moteur électrique (16) du vérin électrique afin de déplacer le piston broyeur (20) en translation vers l'avant par rapport au reste de l'ensemble mobile, en réponse à un appui franc par le fruit à coque (200) logé dans le logement de fruit (102) contre une paroi avant (103) dudit logement lorsque ledit fruit est poussé par le piston broyeur (20) contre ladite paroi avant par l'effet du déplacement en translation vers l'avant de l'ensemble mobile, ce par quoi la coque du fruit à coque (200) est cassée contre la paroi avant du logement de fruit (102) par pression dudit piston broyeur (20) sous l'effet de la rotation du moteur électrique (16),
et **en ce que** :
• le filet (31) de la première vis-sans-fin (30) présente un pas et un diamètre qui sont différents du pas et du diamètre, respectivement, du filet (50) de la seconde vis-sans-fin vis (5).

2. Dispositif à main selon la revendication 1, dans lequel le bâti (3,4) comprend deux parties allongées suivant la direction longitudinale (X), avec une partie supérieure (3) comprenant un premier évidement (31) et une partie inférieure (4) comprenant un premier évidement complémentaire (41), ledit premier évidement (31) et ledit premier évidement complémentaire (41) étant configurés pour former un tunnel (31,41) de guidage lorsque ladite partie supérieure (3) et ladite partie inférieure (4) du bâti sont montées l'une sur l'autre suivant une direction (Y) orthogonale à la direction longitudinale (X), dans lequel l'ensemble mobile est guidé en translation vers l'avant à partir d'une position extrême en arrière et vers l'arrière à partir d'une position extrême en avant.

3. Dispositif à main selon la revendication 1, dans lequel la partie supérieure (3) du bâti (3,4) comprend un second évidement (32) et la partie inférieure (4) dudit bâti comprend un second évidement complémentaire (42) ledit second évidement et ledit second évidement complémentaire étant configurés pour former le logement de fruit (102) lorsque ladite partie supérieure et ladite partie inférieure du bâti (3,4) sont montées l'une sur l'autre, dans lequel le piston broyeur (20) peut être déplacé vers l'avant pour venir en engagement avec la coque du fruit à coque (200) à casser reçu dans ledit logement de fruit.

4. Dispositif à main selon l'une quelconque des revendications 1 à 3, dans lequel :
• la partie avant (1) de l'enveloppe externe du boîtier (101) possède une ouverture (110) venant au droit du logement de fruit (102) pour l'accès audit logement de fruit ; et,
• l'enveloppe externe du boîtier (101) comprend en outre une trappe mobile (10) pour la fermeture du logement de fruit (102), qui est coulissante en translation suivant la direction longitudinale (X) entre une position complètement ouverte en arrière et une position complètement fermée en avant.

5. Dispositif à main selon la revendication 4, comprenant en outre un interrupteur (192) pour la détection de la fermeture de la trappe mobile (10), agencé à l'avant de l'ouverture (110) de la partie avant (1) de l'enveloppe externe du boîtier (101), l'activation du moteur électrique (16) étant empêchée en cas de non-fermeture de ladite trappe.

6. Dispositif à main selon l'une quelconque des revendications 1 à 5, dans lequel la partie avant (1) de l'enveloppe externe du boîtier (101) possède, à une extrémité arrière de ladite partie avant, une section transversale de forme circulaire ayant un rayon déterminé, et possède des lignes d'arrêtes longitudinales (111) qui s'étendent longitudinalement depuis une extrémité avant de la partie avant (1) de l'enveloppe externe du boîtier (101) vers l'extrémité arrière de ladite partie avant, lesquelles arrêtes séparant une section transversale à l'avant de la partie avant (1) de l'enveloppe externe du boîtier en sections circonférentielles (112) adjacentes deux-à-deux, chacune en forme de tuile et ayant un rayon de courbure supérieur au rayon de la section transversale de forme circulaire à l'extrémité arrière de la partie avant (1) de l'enveloppe externe du boîtier (101).

7. Dispositif à main selon l'une quelconque des revendications 1 à 6, dans lequel :
• la paroi avant (103) du logement de fruit (102), présente une fente radiale (104) qui s'étend radialement dans un plan transversal ; et,
• le dispositif comprend en outre un levier (9) pour l'actionnement de l'interrupteur (191) de déclenchement, avec :
• une embase (91) fixe par rapport au bâti (3,4),
• une plaque transversale (92) élastiquement déformable qui s'étend transversalement, depuis l'embase fixe (91), dans le logement de fruit (102) à l'avant dudit logement et en recouvrement de la fente radiale (104),
• une première partie mobile (93) qui s'étend, depuis une face avant de la plaque transversale élastique (92), suivant la direction longitudinale (X) en passant à travers la fente (104),
• une seconde partie mobile (94) qui s'étend transversalement dans le prolongement de la première partie mobile (93), après un coude à 90°, dans un plan transversal en avant de la paroi avant (103) de fond du logement de fruit (102) en regard d'un contact mobile de l'interrupteur d'actionnement (191) pour actionner l'interrupteur de déclenchement (191) en réponse à une déformation élastique vers l'avant de la plaque transversale (92) causée par l'appui franc par le fruit à coque (200) logé dans le logement de fruit (102) contre la paroi avant (103) dudit logement.

8. Dispositif à main selon l'une quelconque des revendications 1 à 7, dans lequel le piston broyeur (20) a une section, en coupe transversale, ayant une forme et des dimensions correspondant sensiblement à la forme et aux dimensions du logement de fruit (102) dans lequel il peut se déplacer en translation suivant la direction longitudinale (X).

9. Dispositif à main selon l'une quelconque des revendications 1 à 8, comprenant une unité de commande électronique (151) configurée pour piloter la course du piston broyeur (20) vers l'avant en commandant le moteur électrique (16) pendant une durée fixe déterminée en réponse à l'activation de l'interrupteur de déclenchement (191).

10. Dispositif à main selon l'une quelconque des revendications 1 à 9, dans lequel :
• l'ensemble mobile (103) comprend en outre un interrupteur de fin de course (131) lié à une face avant du corps du moteur électrique (16) ; et,
• l'arrière du piston broyeur (20) présente un logement (24) pour recevoir un élément élastique configuré pour actionner un contact mobile de l'interrupteur de fin de course (131) afin de commander l'arrêt de la rotation en sens inverse du moteur électrique pour stopper le retrait du piston mobile (20) vers l'arrière.

11. Dispositif à main selon l'une quelconque des revendications 1 à 10, dans lequel l'ensemble mobile (103) comprend une entretoise annulaire (14) fixée à l'avant du corps du moteur électrique, qui s'étend dans un plan transversal, avec un doigt de guidage (141) qui s'étend radialement vers l'extérieur à partir de ladite entretoise, ledit doigt de guidage étant configuré pour guider en translation le déplacement de l'ensemble mobile suivant la direction longitudinale (X), en coopération avec une fente longitudinale associée qui est formée dans le bâti.

12. Dispositif à main selon l'une quelconque des revendications 1 à 11, dans lequel la seconde vis-sans-fin (5) a la forme d'un tube fermé à l'arrière avec un filet externe (50), configuré pour loger la batterie d'alimentation électrique (17).

13. Dispositif à main selon l'une quelconque des revendications 1 à 12, comprenant un écrou (8) solidaire de la partie arrière (2) du boîtier (101), ayant la forme d'un tube fermé à l'arrière avec un filet interne (80) complémentaire du filet (50) de la seconde vis-sans-fin (5), et étant formé
a. de deux portions d'écrou (81,82) séparées suivant un plan parallèle à l'axe longitudinal (A), ainsi que
b. d'un manchon de maintien (83) ayant un diamètre interne correspond sensiblement au diamètre externe de l'écrou (8) pour s'emmancher d'arrière en avant par-dessus les deux portions d'écrou (81,82) afin de maintenir lesdites portions d'écrou mutuellement solidaires l'une de l'autre.

14. Dispositif à main selon la revendication 13, dans lequel l'écrou (8)
comprend, à l'avant, un collet (800) formé de deux portions de collet (801,802) venant de matière avec les deux portions d'écrou (81,82), respectivement, de l'écrou (8),
ledit collet ayant une rainure annulaire interne (810) formé de deux portions de rainure qui s'étendent sur une face interne des deux portions de collet (801,802), respectivement, de l'écrou (8),
ladite rainure annulaire interne (810) étant configurée pour coopérer avec une languette annulaire externe correspondante (300) formée à l'extrémité arrière du bâti (3,4), de deux portions de languette (303,304) qui s'étendent sur une face externe de la partie supérieure (3) et de la partie inférieure (4), respectivement, dudit bâti, pour le guidage en rotation de l'écrou (8).
